(19) **Europäisches Patentamt**
**European Patent Office**
**Office européen des brevets**

(11) **EP 2 273 744 B1**

(12) **EUROPÄISCHE PATENTSCHRIFT**

(45) Veröffentlichungstag und Bekanntmachung des Hinweises auf die Patenterteilung:
**17.08.2011 Patentblatt 2011/33**

(51) Int Cl.:
***H04L 27/38*** (2006.01)  ***H04L 27/06*** (2006.01)

(21) Anmeldenummer: **09008763.6**

(22) Anmeldetag: **03.07.2009**

(54) **Vorrichtung und Verfahren zum Bestimmen eines Datensymbols in einem amplitudenmodulierten Empfangssignal**

Device and method for determining a data symbol in an amplitude modulated reception signal

Dispositif et procédé de détermination d'un symbole de données dans un signal de réception modulé en amplitude

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**12.01.2011 Patentblatt 2011/02**

(73) Patentinhaber: **Universität Duisburg-Essen 45141 Essen (DE)**

(72) Erfinder:
• **Burnic, Admir 47269 Duisburg (DE)**
• **Jung, Peter, Prof. Dr. habil 47051 Duisburg (DE)**

(74) Vertreter: **Zinkler, Franz et al Schoppe, Zimmermann, Stöckeler & Zinkler Patentanwälte Postfach 246 82043 Pullach bei München (DE)**

(56) Entgegenhaltungen:
• **MARVASTI F: "Nonuniform Sampling Theorems for Bandpass Signals at or Below the Nyquist Density" IEEE TRANSACTIONS ON SIGNAL PROCESSING, IEEE SERVICE CENTER, NEW YORK, NY, US, Bd. 44, Nr. 3, 1. März 1996 (1996-03-01), XP011057353 ISSN: 1053-587X**
• **TOBIAS SCHOLAND ET AL: "A Real-Time Zero-Crossing Demodulation Concept" WIRELESS PERSONAL COMMUNICATIONS, KLUWER ACADEMIC PUBLISHERS, DO, Bd. 43, Nr. 2, 27. Oktober 2006 (2006-10-27), Seiten 157-183, XP019557936 ISSN: 1572-834X**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Ausführungsbeispiele gemäß der Erfindung beziehen sich auf die drahtlose Datenkommunikation und im Besonderen auf eine Vorrichtung und ein Verfahren zum Bestimmen eines Datensymbols in einem amplitudenmodulierten Empfangssignal.

In Kommunikationsendgeräten wird die Signalverarbeitung in einen analogen und in einen digitalen Teil aufgeteilt. Zur Umsetzung der analogen Signale in digitale Signale werden Analog/Digital-Umsetzer (A/D) verwendet. Im Gegensatz zur analogen Signalverarbeitung ist die digitale Signalverarbeitung ohne Minderung der Signalqualität möglich. Andererseits ist es mit der analogen Signalverarbeitung in manchen Fällen möglich, kostengünstigere Realisierungen als mit der digitalen Signalverarbeitung zu erreichen.

Die grundlegende Beziehung zwischen den zeitkontinuierlichen und den zugehörigen zeitdiskreten Signalen ist mit dem Abtasttheorem von Shannon, Nyquist, Whittaker und Kotelnikov gegeben. Gemäß dem Abtasttheorem kann jedes zeitkontinuierliche Signal mit begrenzter Bandbreite durch das zeitdiskrete Signal vollständig beschrieben werden. Der Vorgang des Abbildens eines zeitkontinuierlichen Signals in ein zeitdiskretes Signal wird Abtastung genannt. Dem Abtasttheorem entsprechend wird eine zeitlich äquidistante Abtastung des zeitkontinuierlichen Signals mit der Abtastperiode $T_s$ vorgenommen. Diese Art der Abtastung wird im Weiteren als reguläre Abtastung bezeichnet. Ein zeitkontinuierliches Signal $\underline{r}^{(1,BB)}(t)$ wird durch die Abtastwertfolge $\{\underline{r}^{(1,BB)}(kT_s)\}_{k \in Z}$ Eindeutig beschrieben. Gemäß dem Abtasttheorem entspricht die maximale Bandbreite des zeitkontinuierlichen Signals der halben Abtastrate $1/T_s$.

In heutigen drahtlosen Kommunikationssystemen findet eine Übertragung bei Mittenfrequenzen von in der Regel mehr als 400 MHz statt. Im Vergleich zur Mittenfrequenz ist die Bandbreite des Signals gering. Aus diesem Grund wird die Abtastrate maßgeblich von der Mittenfrequenz bestimmt. Eine direkte Abtastung des zeit- und wertkontinuierlichen, hochfrequenten Empfangssignals mit der Mittenfrequenz $f_{IF}$ ist bei dem heutigen Stand der Technik zwar möglich, führt aber zu einem hohen Implementierungsaufwand und einem hohen Energieverbrauch. Aus diesem Grund findet in heutigen Kommunikationsendgeräten die Abtastung der zeitkontinuierlichen Signale, nach einer geeigneten Signalverarbeitung, bei einer niedrigen Mittenfrequenz $f_{IF}$ oder im Basisband statt.

Die reguläre Abtastung fand in den letzten Jahrzehnten eine große Verbreitung. Der Einsatz daraus resultierender Architekturen der Kommunikationsendgeräte ist jedoch selten nachrichtentechnisch motiviert. Vielmehr sind die Gründe in der eingesetzten Technik zu finden. Der Fortschritt in den Kommunikationsendgeräten ist in den meisten Fällen technologisch bedingt.

Die irreguläre Abtastung stellt eine Verallgemeinerung der regulären Abtastung. Sie ergibt sich dann, wenn benachbarte Abtastzeitpunkte nicht äquidistant sind (siehe "Neubauer, A.: Irreguläre Abtastung. Berlin: Springer, 2003. ISBN: 3-540-00306-1.", "Scholand, T.: Entwurf und Realisierung von multistandardfähigen Nulldurchgangsempfängerstrukturen für die drahtlose Kommunikationstechnik, Fachgebiet Kommunikationstechnik, Fakultät Ingenieurwissenschaften der Universität Duisburg-Essen, Dissertation. Aachen: Shaker Verlag, 2007. ISBN : 978-3-8322-5815-3."). Die irreguläre Abtastung verwendet beliebige Abtastzeitpunkte $\{t_k\}_{k \in Z}$ (siehe "Neubauer, A.: Irreguläre Abtastung. Berlin: Springer, 2003. ISBN: 3-540-00306-1.") Die Darstellung der Signale mit nicht äquidistanten Abtastwerten wird im Weiteren irreguläre Signaldarstellung genannt (siehe "Neubauer, A.: Irreguläre Abtastung. Berlin: Springer, 2003. ISBN: 3-540-00306-1.", "Scholand, T.: Entwurf und Realisierung von multistandardfähigen Nulldurchgangsempfängerstrukturen für die drahtlose Kommunikationstechnik, Fachgebiet Kommunikationstechnik, Fakultät Ingenieurwissenschaften der Universität Duisburg-Essen, Dissertation. Aachen: Shaker Verlag, 2007. ISBN : 978-3-8322-5815-3."). Die irreguläre Abtastung eignet sich für die Realisierung einfacher Empfänger eignet. Dies wurde bereits in "Scholand, T.: Entwurf und Realisierung von multistandardfähigen Nulldurchgangsempfängerstrukturen für die drahtlose Kommunikationstechnik, Fachgebiet Kommunikationstechnik, Fakultät Ingenieurwissenschaften der Universität Duisburg-Essen, Dissertation. Aachen: Shaker Verlag, 2007. ISBN : 978-3-8322-5815-3." für die als Nulldurchgangsdetektion (engl. zero crossing detection, ZXD) bekannte Variante der irregulären Abtastung am Beispiel binär frequenzmodulierter und höherstufig phasenumgetasteter Empfangssignale gezeigt. Die Nulldurchgangsdetektion erlaubt die aufwandsgünstige Signalverarbeitung im Zwischenfrequenzbereich (siehe "Scholand, T.: Entwurf und Realisierung von multistandardfähigen Nulldurchgangsempfängerstrukturen für die drahtlose Kommunikationstechnik, Fachgebiet Kommunikationstechnik, Fakultät Ingenieurwissenschaften der Universität Duisburg-Essen, Dissertation. Aachen: Shaker Verlag, 2007. ISBN : 978-3-8322-5815-3.") .

Die Betrachtungen aus "Scholand, T.: Entwurf und Realisierung von multistandardfähigen Nulldurchgangsempfängerstrukturen für die drahtlose Kommunikationstechnik, Fachgebiet Kommunikationstechnik, Fakultät Ingenieurwissenschaften der Universität Duisburg-Essen, Dissertation. Aachen: Shaker Verlag, 2007. ISBN : 978-3-8322-5815-3." fokussieren sich auf die SC-Abwärtsstrecke (single carrier, Einzelträger) und Kanäle mit kurzen Impulsantworten, wie sie in Kurzstreckenfunksystemen üblicherweise auftreten. Durch ein gemeinsames Senden werden kürzeste Impulsantworten auch in zellularen Mobilfunksystemen erreicht. Somit befördert das gemeinsame Senden in der SC-Abwärtsstrecke den Einsatz der irregulären Abtastung.

Die zellularen Mobilfunksysteme mit SC-Abwärtstrecke werden auch in der Zukunft eine bedeutende Rolle spielen. Als wichtigstes Beispiel seien die GSM-Evolutionen EDGE (GSM: global system for mobile communication, globales System zur mobilen Kommunikation, EDGE: enhanced data rate for GSM evolution, erhöhte Datenübertragungsrate für GSM-Systeme) und dessen Weiterentwicklung GERAN (GSM EDGE radio access network, siehe "3rd Generation Partnership Project, Technical Specification Group GSMIEDGE Radio Access Network: Physical layer an the radio path; General description. Release 7, 3GPP TS 45.001, Version 7.7.0, Februar 2008.") genannt. Aus diesem Grund beschränken sich die folgenden Beispiele auf zellulare Mobilfunksysteme mit SC-Abwärtstrecke, was jedoch die Allgemeinheit nicht einschränken soll.

Binär frequenzmodulierte und höherstufig phasenumgetastete Signale enthalten die zu übermittelnde Information ausschließlich in der Augenblicksfrequenz bzw. der Augenblicksphase. Zur Datendetektion genügt es prinzipiell, lediglich die Augenblicksphase des Empfangssignals auszuwerten und die Augenblicksamplitude zu vernachlässigen. Dies führt grundsätzlich zu inkohärenten Empfängern (siehe "Scholand, T.: Entwurf und Realisierung von multistandardfähigen Nulldurchgangsempfängerstrukturen für die drahtlose Kommunikationstechnik, Fachgebiet Kommunikationstechnik, Fakultät Ingenieurwissenschaften der Universität Duisburg-Essen, Dissertation. Aachen: Shaker Verlag, 2007. ISBN : 978-3-8322-5815-3."). Diese inkohärenten Empfänger werden häufig als differenziell kohärent bezeichnet (siehe "Sklar, B.: Digital communications, fundamentals and applications. Englewood Cliffs: Prenticel-Hall, 1988.") Solche differenziell kohärenten Empfänger können auf der Grundlage der Nulldurchgangsdetektion realisiert werden (siehe "Scholand, T.: Entwurf und Realisierung von multistandardfähigen Nulldurchgangsempfängerstrukturen für die drahtlose Kommunikationstechnik, Fachgebiet Kommunikationstechnik, Fakultät Ingenieurwissenschaften der Universität Duisburg-Essen, Dissertation. Aachen: Shaker Verlag, 2007. ISBN : 978-3-8322-5815-3.").

Es ist zweckmäßig (siehe "Scholand, T.: Entwurf und Realisierung von multistandardfähigen Nulldurchgangsempfängerstrukturen für die drahtlose Kommunikationstechnik, Fachgebiet Kommunikationstechnik, Fakultät Ingenieurwissenschaften der Universität Duisburg-Essen, Dissertation. Aachen: Shaker Verlag, 2007. ISBN : 978-3-8322-5815-3."), lediglich diejenigen Nulldurchgangszeitpunkte auszuwerten, welche bei einer positiven Steigung des Empfangssignals auftreten.

Dadurch wird die Auswirkung eines im Empfänger eventuell auftretenden Gleichspannungsversatzes auf die Übertragungsqualität unterdrückt wird (siehe "Scholand, T.: Entwurf und Realisierung von multistandardfähigen Nulldurchgangsempfängerstrukturen für die drahtlose Kommunikationstechnik, Fachgebiet Kommunikationstechnik, Fakultät Ingenieurwissenschaften der Universität Duisburg-Essen, Dissertation. Aachen: Shaker Verlag, 2007. ISBN: 978-3-8322-5815-3.").

Kommunikationssysteme mit binär frequenzmodulierten und höherstufig phasenumgetasteten Signalen setzen eine differenzielle Vorcodierung der zu übertragenden Datensymbole ein. Wird in den Empfängern der Kommunikationsendgeräte die Nulldurchgangsdetektion eingesetzt, so ist die Übertragungsqualität im Falle der linearen Weiterverarbeitung der detektierten Nulldurchgangszeiten durch diejenige Schranke des Bitfehlerverhältnisses bestimmt, welche die differenziell kohärente Detektion differenziell vorcodierter Datensymbole beschreibt (siehe "Scholand, T.: Entwurf und Realisierung von multistandardfähigen Nulldurchgangsempfängerstrukturen für die drahtlose Kommunikationstechnik, Fachgebiet Kommunikationstechnik, Fakultät Ingenieurwissenschaften der Universität Duisburg-Essen, Dissertation. Aachen: Shaker Verlag, 2007. ISBN : 978-3-8322-5815-3."). Diese ist bei binär phasenumgetasteten Signalen als DPSK (engl. Differential phase shift keying, differentielle Phasenumtastung) bekannt (siehe "Sklar, B.: Digital communications, fundamentals and applications. Englewood Cliffs : Prenticel-Hall, 1988.") und wird auch für die differenziell vorcodierte MSK (engl. minimum shift keying, minimale Phasenumtastung) erreicht. MSK ist eine binäre Modulationsart mit stetiger Phase (engl. continuous phase modulation, CPM). In "Scholand, T.: Entwurf und Realisierung von multistandardfähigen Nulldurchgangsempfängerstrukturen für die drahtlose Kommunikationstechnik, Fachgebiet Kommunikationstechnik, Fakultät Ingenieurwissenschaften der Universität Duisburg-Essen, Dissertation. Aachen: Shaker Verlag, 2007. ISBN : 978-3-8322-5815-3." sind darüber hinaus untere Schranken für die differenziell kohärente Detektion differenziell vorcodierter Datensymbole im Falle weiterer binärer CPM und höherstufig phasenumgetasteter Signale angegeben.

Wird statt der erwähnten linearen Weiterverarbeitung der detektierten Nulldurchgangszeiten eine Entscheidungsrückkopplung eingeführt, so lässt sich die Übertragungsqualität verbessern, da so ein quasi-kohärenter Empfänger entsteht (siehe "Scholand, T.: Entwurf und Realisierung von multistandardfähigen Nulldurchgangsempfängerstrukturen für die drahtlose Kommunikationstechnik, Fachgebiet Kommunikationstechnik, Fakultät Ingenieurwissenschaften der Universität Duisburg-Essen, Dissertation. Aachen: Shaker Verlag, 2007. ISBN : 978-3-8322-5815-3."). Die untere Schranke des Bitfehlerverhältnisses wird durch die kohärente Detektion differenziell vorcodierter Datensymbole gegeben (siehe "Scholand, T.: Entwurf und Realisierung von multistandardfähigen Nulldurchgangsempfängerstrukturen für die drahtlose Kommunikationstechnik, Fachgebiet Kommunikationstechnik, Fakultät Ingenieurwissenschaften der Universität Duisburg-Essen, Dissertation. Aachen: Shaker Verlag, 2007. ISBN : 978-3-8322-5815-3.", "Sklar, B . : Digital communications, fundamentals and applications. Englewood Cliffs: Prenticel-Hall, 1988.").

Im Gegensatz zu binär frequenzmodulierten und höherstufig phasenumgetasteten Signalen ist im Falle der höherstufigen Quadraturamplitudenmodulation (QAM) die zu übermittelnde Information sowohl im Betrag

$$\left|\underline{d}_{k_d}\right| = \sqrt{\mathrm{Re}^2\left\{\underline{d}_{k_d}\right\} + \mathrm{Im}^2\left\{\underline{d}_{k_d}\right\}}, \quad k_d = 1,...,N_d,$$

(3.1)

als auch in der Phase

$$\varphi_{k_d} = \arctan\left(\frac{\mathrm{Re}\left\{\underline{d}_{k_d}\right\}}{\mathrm{Im}\left\{\underline{d}_{k_d}\right\}}\right), \quad k_d = 1,...,N_d,$$

(3.2)

eines jeden Datensymbols $\underline{d}_{k_d}$, $k_d = 1..., N_d$, ($k_d$ ist die Nummer des Datensymbols) mit der mittleren Datensymbolenergie $\varepsilon_d$ enthalten.

Dem über die Empfangsantenne empfangenen Nutzsignal überlagert sich am Empfängereingang additiv das weiße gaußverteilte thermische Rauschen. Das resultierende Signal wird auf eine Mittenfrequenz $f_{IF}$ herunter gemischt und anschließend bandbegrenzt. Die Mittenfrequenz muss dabei größer als die halbe Bandbreite des Signals sein.

Das Empfangsfilter habe im Zwischenfrequenzbereich die reellwertige, symmetrische Impulsantwort $h_c(\tau)$. Es wird angenommen, dass das Empfangsfilter eine Wurzel-Kosinus-Charakteristik (engl. root raised cosine, RRC) hat und deshalb

$$\int_{-\infty}^{\infty} h_c(\tau)h_c(\tau + k_b T_s)d\tau = \begin{cases} 1 & \text{für } k_b = 0, \\ 0 & \text{sonst,} \end{cases} \quad k_d = 1,...,N_d,$$

(3.3)

gilt. Wenn gemeinsames Senden betrachtet wird, ist im Zwischenfrequenzbereich um die Mittenfrequenz $f_{IF}$ der ungestörte Anteil des Empfangssignals am Ausgang des Empfangsfilters durch die Autokorrelationsfunktion

$$p(\tau) = \int_{-\infty}^{\infty} h_c(\tau')h_c(\tau' + \tau)d\tau,$$

(3.4)

die der ersten Nyquist-Bedingung genügt, bestimmt. Darüber hinaus liegt das bandbegrenzte Rauschsignal im Zwischenfrequenzbereich um die Mittenfrequenz $f_{IF}$ am Ausgang des Empfangsfilters vor.

Mit der Symboldauer $T_s$, mit der mittleren Datensymbolenergie $\varepsilon_d$, mit der Zwischenfrequenz $f_{IF}$, mit dem Nullphasenwinkel, mit dem Betrag $|\underline{d}_{k_d}|$ und mit der Phase $\varphi_{k_d}$ des Datensymbols $\underline{d}_{k_d}$, $k_d = 1,...,N_d$, gemäß Formel (3.1) und Formel (3.2), mit der Autokorrelationsfunktion $p(\tau)$ nach Formel (3.4) und mit dem Rauschsignal $n'(t)$ ergibt sich das resultierende Empfangssignal $r^{(IF)}(t)$ am Ausgang des Empfangsfilters. Das Zwischenfrequenzsignal kann als

$$r^{(IF)}(t) = \sum_{k_d=1}^{N_d} \sqrt{\frac{2\varepsilon_d}{T_s}}\left|\underline{d}_{k_d}\right|\mathrm{Re}\left[\exp\left\{j\left(\varphi_{k_d} + 2\pi f_{IF}t + \varphi_0\right)\right\}\right]p\left(t - [k_d - 1]T_s\right) + n'(t)$$

(3.5)

geschrieben werden, sofern der Erwartungswert $|\underline{d}_{k_d}|$, $k_d$ = 1,...,$N_d$, gleich eins ist. Bedrosian und Rice zeigten in "Bedrosian, E ; Rice, S.O. : Distortion and crosstalk of linearly filtered, angle-modulated signals. Proceedings of the IEEE, Bd. 56 (1968), S, 2-13.", dass der ungestörte Anteil des resultierende Empfangssignal $r^{(IF)}(t)$ approximiert werden kann und somit

$$r^{(IF)}(t) \approx \sum_{k_d=1}^{N_d} \sqrt{\frac{2\mathcal{E}_d}{T_s}} \left|\underline{d}_{k_d}\right| \text{Re}\left[\exp\left\{j\left(\varphi_{k_d} p\left(t-[k_d-1]T_s\right) + 2\pi f_{IF}t + \varphi_0\right)\right\}\right] + n'(t) \qquad (3.6)$$

folgt.

Das resultierende Empfangssignal $r^{(IF)}(t)$ hat im Allgemeinen eine nicht konstante Einhüllende *a(t)*. Es kann als Produkt *a(t)* von und einer Schwingung mit einer Mittenfrequenz $f_{IF}$ repräsentiert werden. Mit dem Phasenrauschsignal $\varphi_n(t)$ und mit dem durch die Datenübertragung beeinflussten Phasensignal $\varphi_n(t)$ folgt allgemein (siehe "Proakis, J, G.: Digital Communications. Zweite Auflage, New York: McGraw-Hill, 1989.", "Scholand, T.: Entwurf und Realisierung von multistandardfähigen Nulldurchgangsempfängerstrukturen für die drahtlose Kommunikationstechnik, Fachgebiet Kommunikationstechnik, Fakultät Ingenieurwissenschaften der Universität Duisburg-Essen, Dissertation. Aachen: Shaker Verlag, 2007. ISBN : 978-3-8322-5815-3.")

$$r^{(IF)}(t) = a(t)\sin\left(2\pi f_{IF}t + \varphi(t) + \varphi_n(t)\right). \qquad (3.7)$$

Ist die Zwischenfrequenz $f_{IF}$ wesentlich größer als die Bandbreite $B_s$ des resultierenden Empfangssignals $r^{(IF)}(t)$

$$f_{IF} >> B_s, \qquad (3.8)$$

so kann *a(t)* aus Formel (3.7) im Zeitintervall zwischen $t_{k_d}^-$, $k_d = 1,...,N_d$ und $t_{k_d}^+$, $k_d = 1,...,N_d$, in einer guten Näherung als konstant betrachtet werden.

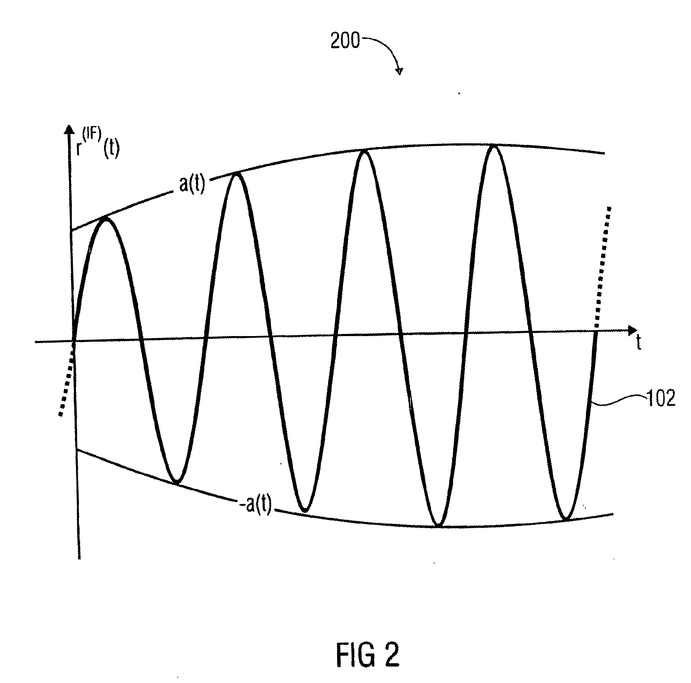

In Fig. 2 ist ein Ausschnitt 200 eines resultierenden Empfangssignals $r^{(IF)}(t)$ 102 am Ausgang des Empfangsfilters im Falle eines vollständig unterdrückten Rauschsignals beispielhaft dargestellt. Das resultierende Empfangssignal $r^{(IF)}(t)$ 102 nimmt im Allgemeinen reelle Amplitudenwerte zwischen einer minimalen Amplitude -A und einer maximalen Amplitude +*A* an.

Da die Nulldurchgangsdetektion lediglich die Phase der empfangenen Signale auswertet, ist sie (für amplitudenmodulierte Signale, wie zum Beispiel ein quadraturamplitudenmoduliertes Signal) nicht anwendbar.

F. Marvasti diskutiert in "Nonuniform Sampling Theorems for Bandpass Signals at or Below the Nyquist Density" das Problem der Wiedergewinnung von Bandpasssignalen aus einer Menge von ungleichmäßigen Abtastwerten. Dabei sind Interpolationsformen für bestimmte Mengen von irregulären Abtastwerten gegeben. Dabei wird das Signal bei jedem N-ten Maximalpunkt abgetastet, wodurch Abtast- und Wiederherstellungstechniken bei der Nyquist-Dichte und bei halber Nyquist-Dichte ermöglicht werden.

Die Aufgabe der vorliegenden Erfindung ist es, ein Konzept zur Bestimmung eines Datensymbols in einem amplitudenmodulierten Signal unter Verwendung von irregulärer Abtastung zu schaffen.

Diese Aufgabe wird durch eine Vorrichtung gemäß Anspruch 1 und ein Verfahren gemäß Anspruch 14 gelöst.

Ein Ausführungsbeispiel gemäß der Erfindung schafft eine Vorrichtung zum Bestimmen eines Datensymbols in einem amplitudenmodulierten Empfangssignal. Die Vorrichtung umfasst einen Schwellwertdurchgangsdetektor und einen Datensymbolbestimmer. Der Schwellwertdurchgangsdetektor ist ausgelegt, um einen ersten Schwellwertdurchgangszeitpunkt und einen zweiten Schwellwertdurchgangszeitpunkt zu bestimmen, wobei das amplitudenmodulierte Empfangssignal zu dem ersten Schwellwertdurchgangszeitpunkt einen ersten Schwellwert und zu dem zweiten Schwellwertdurchgangszeitpunkt einen zweiten Schwellwert aufweist. Der erste Schwellwert und der zweite Schwellwert unterscheiden sich dabei. Der Datensymbolbestimmer ist ausgelegt, um das Datensymbol basierend auf dem ersten Schwellwertdurchgangszeitpunkt und dem zweiten Schwellwertdurchgangszeitpunkt zu bestimmen und bereitzustellen.

Ausführungsbeispiele gemäß der Erfindung basieren auf dem Kerngedanken, dass zumindest für zwei unterschiedliche Schwellwerte detektiert wird, wann das Empfangssignal diese Schwellwerte erreicht. Dadurch kann im Gegensatz zur Nulldurchgangsdetektion nicht nur die Phase, sondern auch die Amplitude des Empfangssignals bestimmt werden. Es wird somit eine Möglichkeit geschaffen, um auch bei amplitudenmodulierten Empfangssignalen mit Hilfe von irregulärer Abtastung Datensymbole zu rekonstruieren. Eine wesentlich aufwendigere reguläre Abtastung des Empfangssignals ist daher nicht notwendig. Basierend auf dem beschriebenen Konzept können also auch beispielsweise höherstufige Quadraturamplitudenmodulationsarten, wie z.B. 16-QAM, 32-QAM oder 64-QAM, mit irregulärer Abtastung verarbeitet werden.

Einige Ausführungsbeispiele gemäß der Erfindung umfassen einen Schwellwertbestimmer, der den ersten Schwellwert und/oder den zweiten Schwellwert bestimmt, wobei der erste Schwellwert und der zweite Schwellwert auf einem Leistungsparameter und einem Skalierungsfaktor basieren.

Bei einigen weiteren Ausführungsbeispielen gemäß der Erfindung ist der Schwellwertbestimmer ausgelegt, um den Skalierungsfaktor abhängig von einer Modulationsart des amplitudenmodulierten Empfangssignals und abhängig von einer Impulsantwort des Sendefilters oder einer Impulsantwort des Empfangsfilters zu bestimmen.

Einige Ausführungsbeispiele gemäß der Erfindung beziehen sich auf ein Verfahren zum Bestimmen eines Datensymbols in einem amplitudenmodulierten Empfangssignal. Das Verfahren umfasst ein Bestimmen eines ersten Schwellwertdurchgangszeitpunkts und eines zweiten Schwellwertdurchgangszeitpunkts, ein Bestimmen des Datensymbols und ein Bereitstellen des Datensymbols. Dabei weist das amplitudenmodulierte Empfangssignal zu dem ersten Schwellwertdurchgangszeitpunkt einen ersten Schwellwert und zu dem zweiten Schwellwertdurchgangszeitpunkt einen zweiten Schwellwert auf. Der erste Schwellwert und der zweite Schwellwert unterscheiden sich. Das Datensymbol wird basierend auf dem ersten Schwellwertdurchgangszeitpunkt und dem zweiten Schwellwertdurchgangszeitpunkt bestimmt.

Ausführungsbeispiele gemäß der Erfindung werden nachfolgend Bezug nehmend auf die beiliegenden Figuren näher erläutert. Es zeigen:

Fig. 1      ein Blockschaltbild einer Vorrichtung zum Bestim- men eines Datensymbols;

Fig. 2      eine schematische Darstellung eines Ausschnitts eines Empfangssignals am Ausgang eines Empfangs- filters im Falle eines vollständig unterdrückten Rauschsignals n'($t$);

Fig. 3      ein Blockschaltbild einer Vorrichtung zum Bestim- men eines Datensymbols;

Fig. 4      eine schematische Darstellung eines Ausschnitts eines resultierenden Empfangssignals $r^{(IF)}(t)$ am Ausgang des Empfangsfilters im Falle eines voll- ständig unterdrückten Rauschsignals n'($t$);

Fig. 5      eine schematische Darstellung einer minimalen Norm $\rho_{min}(16)$ im Falle von 16-QAM;

Fig. 6      eine Tabelle mit einem Vergleich von P($M$) und $\rho_{min}(M)$ für verschiedene Modulationsarten;

Fig. 7      ein Diagramm einer Wurzel-Cosinus-Charakteristik eines Sendefilters mit dem Roll-Off-Faktor $\alpha$ = 0,22;

Fig. 8      ein Diagramm eines Verhältnisses $\gamma_{RRC(\alpha)}$ des Nutz- anteils zur Summe der Störanteile für das RRC- Filter in Abhängigkeit von Roll-Off-Faktor $\alpha$;

Fig. 9      ein Diagramm des Nutzanteils abzüglich der Summe der Störanteile der numierten Impulsantwort des LRC-

Filters $\left(1 - \dfrac{1}{\gamma_{RRC(\alpha)}}\right)$ in Abhängigkeit vom Roll- Off-Faktor $\alpha$;

Fig. 10     ein Diagramm eines Bitfehlerverhältnisses und Symbolfehlerverhältnisses für 16-QAM bei der Ver- wendung der Schwellwertdurchgangsdetektion ($f_{IF}$ = 20 $B$, $\zeta_{f_{IF}}$ = 0,1);

Fig. 11     ein Diagramm eines Bitfehlerverhältnisses und Symbolfehlerverhältnisses für 32-Kreuz-QAM bei der Ver- wendung der Schwellwertdurchgangsdetektion ($f_{IF}$=20$B$, $\zeta_{f_{IF}}$ = 0,1);

Fig. 12 ein Diagramm eines Bitfehlerverhältnisses und Symbolfehlerverhältnisses für 64-QAM bei der Ver- wendung der Schwellwertdurchgangsdetektion ($f_{\text{IF}} = 20B, \zeta_{f_{IF}} = 0,1$);

Fig. 13 ein Diagramm eines für das Erreichen des Bitfeh- lerverhältnisses $10^{-2}$ notwendiges Signal-Stör- Verhältnis $10\log_{10}(E_b/N_0)$ in dB in Abhängigkeit von $f_{\text{IF}}$ im Falle von 16-QAM und der Schwellwert- durchgangsdetektion (SX);

Fig. 14 ein Diagramm eines für das Erreichen des Bitfeh- lerverhältnisses $10^{-2}$ notwendiges Signal-Stör- Verhältnis $10\log_{10}(E_b/N_0)$ in dB in Abhängigkeit von $f_{\text{IF}}$ im Falle von 32-Kreuz-QAM und der Schwellwertdurchgangsdetektion (SX);

Fig. 15 ein Diagramm eines für das Erreichen des Bitfeh- lerverhältnisses $10^{-2}$ notwendiges Signal-Stör- Verhältnis $10\log_{10}(E_b/N_0)$ in dB in Abhängigkeit von $f_{\text{IF}}$ für Skalierungsfaktoren im Falle von 64- QAM und der Schwellwertdurchgangsdetektion (SX);

Fig. 16 ein Diagramm eines für das Erreichen des Bitfeh- lerverhältnisses $10^{-2}$ notwendiges Signal-Stör- Verhältnis $10\log_{10}(E_b/N_0)$ in dB in Abhängigkeit von $f_{\text{IF}}$ und der Taktrate 200 MHz im Falle von 16- QAM und der Schwellwertdurchgangsdetektion (SX);

Fig. 17 ein Blockschaltbild eines Empfängers mit einer Vorrichtung zum Bestimmen eines Datensymbols;

Fig. 18 ein Blockschaltbild eines Empfängers mit einer Vorrichtung zum Bestimmen eines Datensymbols; und

Fig. 19 ein Flussdiagramm eines Verfahrens zum Bestimmen eines Datensymbols.

In der vorliegenden Anmeldung werden teilweise für Objekte und Funktionseinheiten, die gleiche oder ähnliche funktionelle Eigenschaften aufweisen, gleiche Bezugszeichen verwendet.

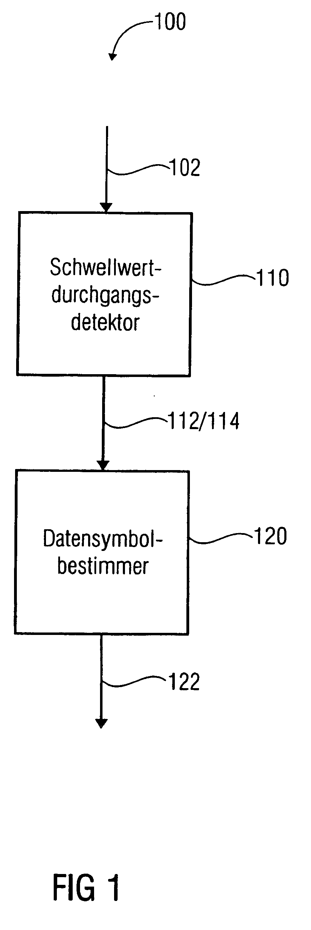

Fig. 1 zeigt ein Blockschaltbild einer Vorrichtung 100 zum Bestimmen eines Datensymbols 122 in einem amplitudenmodulierten Empfangssignal 102 entsprechend einem Ausführungsbeispiel gemäß der Erfindung. Die Vorrichtung 100 umfasst einen Schwellwertdurchgangsdetektor 110, der mit einem Datensymbolbestimmer 120 verbunden ist. Der Schwellwertdurchgangsdetektor 110 bestimmt einen ersten Schwellwertdurchgangszeitpunkt 112 und einen zweiten Schwellwertdurchgangszeitpunkt 114, wobei das amplitudenmodulierte Empfangssignal 102 zu dem ersten Schwellwertdurchgangszeitpunkt 112 einen ersten Schwellwert und zu dem zweiten Schwellwertdurchgangszeitpunkt 114 einen zweiten Schwellwert aufweist. Dabei unterscheiden sich der erste Schwellwert und der zweite Schwellwert voneinander. Der Datensymbolbestimmer 120 bestimmt das Datensymbol 122 basierend auf dem ersten Schwellwertdurchgangszeitpunkt 112 und dem zweiten Schwellwertdurchgangszeitpunkt 114 und stellt das Datensymbol 122 bereit.

Durch die Bestimmung von zumindest zwei Schwellwertdurchgangszeitpunkten 112, 114 für zwei unterschiedliche Schwellwerte kann sowohl Amplitude als auch Phase des Empfangssignals 102 bestimmt werden. Dadurch kann mit geringem Aufwand ein Datensymbol 122, das in dem amplitudenmodulierten Empfangssignal 102 enthalten ist, rekonstruiert werden. Dadurch kann beispielsweise der technische Aufwand in einem Empfänger erheblich reduziert werden, wodurch ein Empfänger z.B. kleiner und kostengünstiger herstellbar ist.

Der zweite Schwellwert kann beispielsweise dem negativen ersten Schwellwert, einem Bruchteil oder einem Vielfachen des ersten Schwellwerts entsprechen oder unabhängig vom ersten Schwellwert bestimmt werden.

Der Schwellwertdurchgangsdetektor 110 kann beispielsweise jeden Schwellwertdurchgangszeitpunkt erfassen, wenn das Empfangssignal 102 entweder den ersten oder den zweiten Schwellwert aufweist. Alternativ können beispielsweise nur Schwellwertdurchgangszeitpunkte erfasst werden, wenn das Empfangssignal 102 eine positive Steigung aufweist, oder nur Schwellwertdurchgangszeitpunkte erfasst werden, wenn das Empfangssignal 102 eine negative Steigung aufweist.

Bei dem amplitudenmodulierten Empfangssignal 102 kann es sich beispielsweise um ein Signal mit höherstufiger Quadraturamplitudenmodulation, wie z.B. 16-QAM, 32-QAM oder 64-QAM handeln. Der Schwellwertdurchgangsdetektor kann zum Beispiel als eigens konzipierte Hardware und/oder basierend auf einem oder mehreren Komparatoren realisiert werden. Der Datensymbolbestimmer 120 kann z.B. ebenfalls eine eigens konzipierte Hardware oder Teil eines digitalen Signalprozessors sein. Alternativ kann der Datensymbolbestimmer 120 auch ein Computerprogramm zum Ausführen mit einem Prozessor oder Mikrocontroller sein.

Bei einigen Ausführungsbeispielen gemäß der Erfindung bestimmt der Datensymbolbestimmer 120 das Datensymbol 122 basierend auf einer Multiplikation einer Betragsvariable und einer Phasenvariable. Die Betragsvariable hängt dabei beispielsweise von einer Differenz des ersten Schwellwertdurchgangszeitpunkts 112 und des zweiten Schwellwertdurchgangszeitpunkts 114 ab und die Phasenvariable hängt z.B. von einer Summe des ersten Schwellwertdurchgangszeitpunkts 112 und des zweiten Schwellwertdurchgangszeitpunkts 114 ab.

Des Weiteren kann die Betragsvariable den ersten Schwellwert und/oder den zweiten Schwellwert als Koeffizienten aufweisen. Entspricht der erste Schwellwert beispielsweise dem negativen zweiten Schwellwert kann die Betragsvariable auch nur einen der beiden Schwellwerte als Koeffizienten aufweisen. In anderen Worten, die Betragsvariable kann sich beispielsweise aus mehreren Koeffizienten zusammensetzen, wovon einer dem ersten Schwellwert oder dem zweiten Schwellwert entspricht. Weist die Betragsvariable beide Schwellwerte als Koeffizienten auf, kann einer durch den anderen ersetzt werden, wenn der erste Schwellwert zu dem zweiten Schwellwert in einem festen Verhältnis steht.

Bei einigen Ausführungsbeispielen gemäß der Erfindung umfasst die Vorrichtung 100 ein Empfangsfilter und der Datensymbolbestimmer 120 ist ausgelegt, um das Datensymbol 122 basierend auf einer Autokorrelation einer Impulsantwort des Empfangsfilters zu bestimmen.

Beispielsweise kann die Phasenvariable von mehreren Koeffizienten abhängen, von denen einer die Autokorrelation der Impulsantwort des Empfangsfilters ist.

Bei einigen weiteren Ausführungsbeispielen gemäß der Erfindung umfasst die Vorrichtung 100 einen Schwellwertbestimmer, der den ersten Schwellwert und den zweiten Schwellwert bestimmt, wobei der erste Schwellwert und der zweite Schwellwert auf einem Leistungsparameter und einem Skalierungsfaktor basieren.

Der Leistungsparameter kann beispielsweise eine mittlere Leistung des Empfangssignals, eine maximale Leistung des Empfangssignals oder ein anderer Parameter, der auf Leistung des Empfangssignals 102 basiert, sein.

Der Skalierungsfaktor kann beispielsweise von einer Modulationsart des amplitudenmodulierten Empfangssignals und von einer Impulsantwort eines Filters abhängig sein. Dabei kann die Vorrichtung 100 ein Empfangsfilter aufweisen, und das amplitudenmodulierte Empfangssignal 102 kann von einem Sender gesendet werden, der einen Sendefilter aufweist. Dann kann der Skalierungsfaktor beispielsweise von der Impulsantwort des Sendefilters oder der Impulsantwort des Empfangsfilters abhängen. Wenn der Skalierungsfaktor von einer Impulsantwort des Sendefilters abhängt, kann die Impulsantwort des Sendefilters zum Beispiel durch Parameter beschrieben werden. Diese Impulsantwortparameter können mit dem amplitudenmodulierten Empfangssignal 102 an den Empfänger übertragen werden.

In anderen Worten, die Schwellwerte können an die Amplitude des Empfangssignals 102 angepasst werden. Es ist nicht sinnvoll, einen Schwellwert höher als eine maximale Amplitude des Empfangssignals 102 zu bilden. Ein Schwellwert kann beispielsweise so gewählt werden, dass er im annähernd linearen Bereich zwischen dem negativen Umkehrpunkt und dem positiven Umkehrpunkt einer Schwingung des Empfangssignals 102 liegt. Alternativ kann ein Schwellwert auch fest vorgegeben oder verschiedene Schwellwerte für verschiedene Empfangssignale in einer Datenbank gespeichert sein.

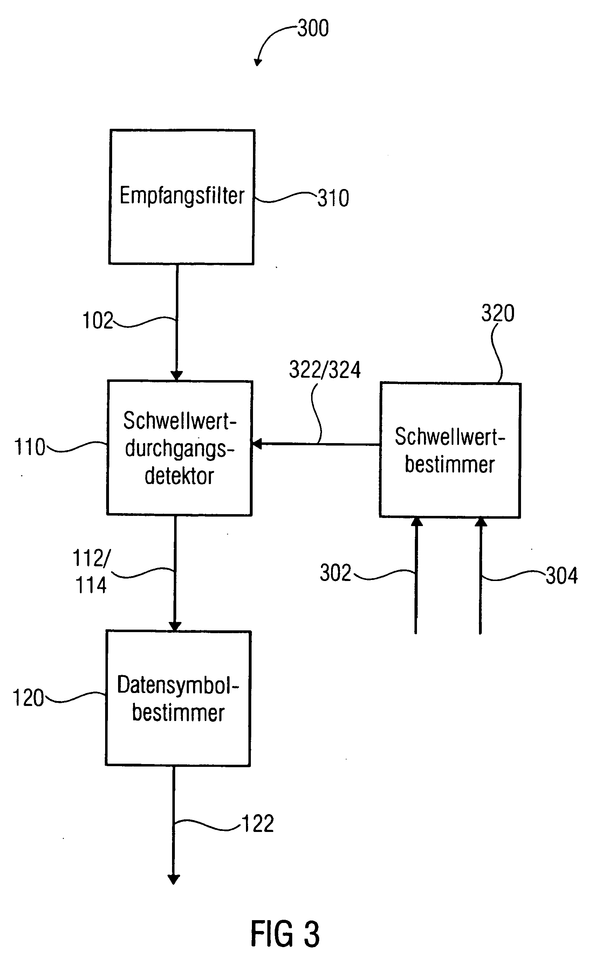

Fig. 3 zeigt ein Blockschaltbild einer Vorrichtung 300 zum Bestimmen eines Datensymbols 122 in einem amplitudenmodulierten Empfangssignal 102 entsprechend einem Ausführungsbeispiel gemäß der Erfindung. Die Vorrichtung 300 umfasst einen Schwellwertdurchgangsdetektor 110, einen Datensymbolbestimmer 120, ein Empfangsfilter 310 und einen Schwellwerbestimmer 320. Das Empfangsfilter 310 und der Schwellwertbestimmer 320 sind mit dem Schwellwertdurchgangsdetektor 110 verbunden und der Schwellwertdurchgangsdetektor 110 ist mit dem Datensymbolbestimmer 120 verbunden.

Wie zuvor beschrieben, kann der Schwellwertbestimmer 320 den ersten Schwellwert 322 und/oder den zweiten Schwellwert 324 basierend auf einem Leistungsparameter 302 und einem Skalierungsfaktor 304 bestimmen. Der Skalierungsfaktor 304 kann dem Schwellwertbestimmer 320, wie in Fig. 3 gezeigt, bereitgestellt werden oder alternativ kann der Skalierungsfaktor vom Schwellwertbestimmer 320 bestimmt werden.

Der Schwellwertbestimmer 320 kann zum Beispiel, wie in Fig. 3 gezeigt, eine eigenständige Einheit bilden oder alternativ in dem Datensymbolbestimmer 120 integriert sein.

Der Datensymbolbestimmer 120 kann zum Beispiel, wie zuvor beschrieben, das Datensymbol 122 basierend auf einer Autokorrelation einer Impulsantwort des Empfangsfilters 310 bestimmen.

Die Vorrichtung 300 kann, wie in Fig. 3 gezeigt, sowohl den Empfangsfilter 310 als auch den Schwellwertbestimmer 320 oder auch nur einen der beiden umfassen.

Einige Ausführungsbeispiele gemäß der Erfindung beziehen sich auf ein Konzept für eine Schwellwertdurchgangsdetektion.

Um die irreguläre Abtastung zum Beispiel in Verbindung mit gemeinsamem Senden aufwandsgünstig in den Empfängern der SC-Abwärtsstrecke zellularer Mobilfunksysteme einsetzen zu können, können die bisher bekannten Ergebnisse aus "Scholand, T.: Entwurf und Realisierung von multistandardfähigen Nulldurchgangsempfängerstrukturen für die drahtlose Kommunikationstechnik, Fachgebiet Kommunikationstechnik, Fakultät Ingenieurwissenschaften der Universität Duisburg-Essen, Dissertation. Aachen: Shaker Verlag, 2007. ISBN : 978-3-8322-5815-3." und den dort angegebenen Fundstellen auf Signale mit höherstufiger Quadraturamplitudenmodulation, entsprechend dem beschriebenen Konzept, erweitert werden. Zum Beispiel sind 16-QAM, 32-QAM und 64-QAM aus heutiger Sicht von besonders hohem Interesse. Die Modifikation der Nulldurchgangsdetektion wird als Schwellwertdurchgangsdetektion (engl. threshold crossing detection, TXD) bezeichnet.

Wie die Nulldurchgangsdetektion aus "Scholand, T.: Entwurf und Realisierung von multistandardfähigen Nulldurchgangsempfängerstrukturen für die drahtlose Kommunikationstechnik, Fachgebiet Kommunikationstechnik, Fakultät Ingenieurwissenschaften der Universität Duisburg-Essen, Dissertation. Aachen: Shaker Verlag, 2007. ISBN : 978-3-8322-5815-3.", so kann auch die Schwellwertdurchgangsdetektion auf das Empfangssignal im Zwischenfrequenzbereich angewendet werden. Die Schwellwertdurchgangsdetektion kann jedoch genauso in anderen Frequenzbereichen verwendet werden.

Für die mit der Schwellwertdurchgangsdetektion erzielbare Übertragungsqualität ist unter anderem die geeignete Wahl der Schwellwerte von großer Bedeutung.

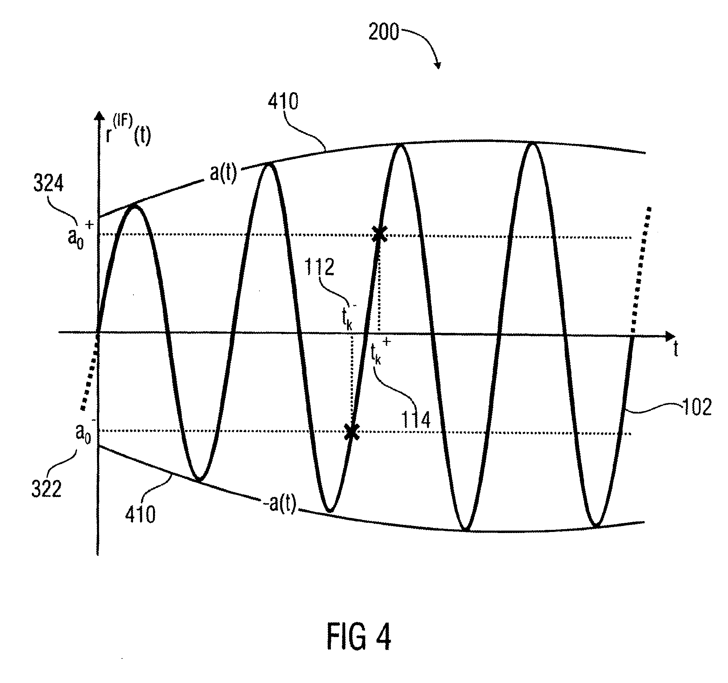

Fig. 4 zeigt eine schematische Darstellung 200 eines amplitudenmodulierten Empfangssignals 102. Dabei ist auf der x-Achse die Zeit t und auf der y-Achse die Amplitude $r^{(IF)}(t)$ des Empfangssignals 102 dargestellt. Des Weiteren ist ein erster Schwellwert $a_0^-$ 322 und ein zweiter Schwellwert $a_0^+$ 324 und eine Einhüllende $a(t)$ 410 gezeigt.

Der Schwellwertdurchgangsdetektor 110 kann beispielsweise erkennen, dass das Empfangssignal 102 zum ersten Schwellwertdurchgangszeitpunkt $t_k^-$ 112 den ersten Schwellwert 322 aufweist und zum zweiten Schwellwertdurchgangszeitpunkt $t_k^+$ 114 den zweiten Schwellwert 324 aufweist.

Da die Nulldurchgangsdetektion lediglich die Phase der empfangenen Signale auswertet, ist sie nicht anwendbar. Sie kann stattdessen, wie gezeigt, um eine Amplitudenauswertung erweitert werden. Dies wird dadurch erreicht, dass anstelle des in der Nulldurchgangsdetektion betrachteten, einzigen und zu Null gewählten Schwellwertes mindestens zwei voneinander verschiedene Schwellwerte verwendet werden. Um einen möglichst einfachen Empfänger realisieren zu können, werden im Rahmen der vorliegenden Arbeit genau zwei Schwellwerte verwendet. Es können jedoch auch mehr als zwei unterschiedliche Schwellwerte verwendet werden, um beispielsweise das Fehlerverhältnis zu senken. Der Argumentation in "Scholand, T.: Entwurf und Realisierung von multistandardfähigen Nulldurchgangsempfängerstrukturen für die drahtlose Kommunikationstechnik, Fachgebiet Kommunikationstechnik, Fakultät Ingenieurwissenschaften der Universität Duisburg-Essen, Dissertation. Aachen: Shaker Verlag, 2007. ISBN : 978-3-8322-5815-3." folgend, werden lediglich diejenigen Schwellwertdurchgangszeitpunkte ausgewertet, welche bei einer positiven Steigung des Empfangssignals auftreten, und die Schwellwerte symmetrisch um den Wert Null angeordnet. Genauso können aber auch nur Schwellwertdurchgangszeitpunkte ausgewertet werden, die bei negativen Steigungen auftreten, oder Schwellwertdurchgangszeitpunkte ausgewertet werden, die sowohl bei positiver Steigung als auch bei negativer Steigung auftreten. Ebenso können auch Schwellwerte verwendet werden, die nicht symmetrisch um den Wert Null liegen. Es sei + $a_0 \geq 0$ ein beliebiger reeller Amplitudenwert aus dem halboffenen Intervall $[0,+A[$.

Nimmt $r^{(IF)}(t)$ zum Schwellwertdurchgangszeitpunkt $t_k^+$ im halboffenen Zeitintervall $[(k_d - 1)T_s, k_d T_s[(k_d = 1,..., N_d,$ diesen Amplitudenwert an, so folgt

$$\varphi_{k_d} p\left(t_k^+ - [k_d - 1]T_s\right) + 2\pi f_{IF} t_k^+ + \varphi_0 + \frac{\pi}{2} - 2\pi k \approx \sqrt{\frac{T_s}{2\mathcal{E}_d}} \frac{+a_0 - n'\left(t_k^+\right)}{\left|d_{k_d}\right|},$$
$$t_k^+ \in \left[(k_d - 1)T_s, k_d T_s\right[, \quad (3.9)$$

aus Formel (3.6). Entsprechend sei $-a_0$ das negative Pendant zu $+a_0$, das zum Schwellwertdurchgangszeitpunkt $t_k^-$ im Zeitintervall $[(k_d - 1)T_s, k_d T_s[, k_d = 1,..., N_d,$ erreicht wird. Jetzt gilt

$$\varphi_{k_d} p\left(t_k^- - [k_d - 1]T_s\right) + 2\pi f_{IF} t_k^- + \varphi_0 + \frac{\pi}{2} - 2\pi k \approx \sqrt{\frac{T_s}{2\mathcal{E}_d}} \frac{-a_0 - n'\left(t_k^-\right)}{\left|d_{k_d}\right|},$$
$$t_k^- \in \left[(k_d - 1)T_s, k_d T_s\right[, \quad (3.10)$$

für Formel (3.6). Im Folgenden wird ohne Einschränkung der Allgemeinheit in Analogie zu "Scholand, T.: Entwurf und Realisierung von multistandardfähigen Nulldurchgangsempfängerstrukturen für die drahtlose Kommunikationstechnik, Fachgebiet Kommunikationstechnik, Fakultät Ingenieurwissenschaften der Universität Duisburg-Essen, Dissertation.

Aachen: Shaker Verlag, 2007. ISBN : 978-3-8322-5815-3." $t_k^-$ stets kleiner oder gleich $t_k^+$ gewählt. D.h., dass $t_k^-$ in der Regel vor $t_k^+$ liegt. Der Fall $t_k^-$ gleich $t_k^+$ ergibt sich nur für $a_0$ gleich Null. In diesem Fall entartet die Schwellwertdurchgangsdetektion zur Nulldurchgangsdetektion. Durch die Wahl $t_k^- \leq t_k^+$ kann erreicht werden, dass nur diejenigen Anteile von $r^{(IF)}(t)$, welche eine positive Steigung haben, verarbeitet werden.

Die Wahl von $a_0$ ist für die erzielbare Übertragungsqualität von entscheidender Bedeutung. Es ist zweckmäßig, $a_0$ so zu bestimmen, dass $r^{(IF)}(t)$ zwischen -$a_0$ und +$a_0$ linear interpoliert werden kann. Mit der mittleren Leistung

$$P^{(IF)} = \frac{2\mathcal{E}_d}{T_s} + N_0 B_s \qquad (3.11)$$

des resultierenden Empfangssignal $r^{(IF)}(t)$ und einem von der Zwischenfrequenz $f_{IF}$ abhängigen, reellwertigen Skalierungsfaktor $\zeta_{f_{IF}}$, $1 > \zeta_{f_{IF}} > 0, \zeta_{f_{IF}} \in \mathbf{R}$, wählt man

$$a_0 = \sqrt{P^{(IF)}} \cdot \zeta_{f_{IF}}, \quad 1 > \zeta_{f_{IF}} > 0, \zeta_{f_{IF}} \in \mathbb{R}. \qquad (3.12)$$

Der Skalierungsfaktor $\zeta_{f_{IF}}$ wurde bislang nicht geschlossen analytisch bestimmt . Es zeigt sich, dass die Wahl des Skalierungsfaktors beispielsweise von der Art der Bandbegrenzung und von der gewählten Signalkonstellation abhängt. Damit sowohl die Schwelle -$a_0$ als auch die Schwelle +$a_0$ mindestens einmal in einem Symbolintervall der Dauer $T_s$ erreicht werden, muss

$$t_k^+ - t_k^- \leq T_s \qquad (3.13)$$

gelten. Die Zwischenfrequenz ist ein reellwertiges Vielfaches der reziproken Symboldauer $T_s$

$$f_{IF} = \frac{\psi}{T_s} > B_s, \quad \psi > 1, \psi \in \mathbb{R}^+. \qquad (3.14)$$

Mit Formel (3.14) folgt

$$t_k^+ - t_k^- \leq \frac{\psi}{f_{IF}} < \frac{\psi}{B_s}, \quad \psi > 1, \psi \in \mathbb{R}^+, \qquad (3.15)$$

aus Formel (3.14).

Für die Datendetektion genügt es im Sinne einer ausreichenden Statistik (engl. sufficient statistics), lediglich einen einzigen Schwellwertdurchgangszeitpunkt $t_k^+$ und darüber hinaus einen einzigen Schwellwertdurchgangszeitpunkt $t_k^-$ je Datensymbol zu bestimmen. Diese Schwellwertdurchgangszeitpunkte werden im Folgenden mit $t_{k_d}^+$ und $t_{k_d}^-$ bezeichnet. Für $\Psi \gg 1$ treten in $[(k_d - 1)T_s, k_d T_s[, k_d = 1,...,N_d$, jedoch zahlreiche Schwellwertdurchgangszeitpunkte $t_{k'}^-, k' \in \mathbf{N}$, und $t_{k''}^+, k'' \in \mathbf{N}$, auf. Dieser Umstand erlaubt eine einfache Synchronisation, wenn die gewünschten Schwellwertdurchgangszeitpunkt $t_{k_d}^+$ und $t_{k_d}^-$ aus den insgesamt gemessenen $t_{k'}^-, k' \in \mathbf{N}$, und $t_{k''}^+, k'' \in \mathbf{N}$, so gewählt werden, dass sie beispielsweise möglichst nahe an der Mitte $(k_d - 1/2)T_s$ des $[(k_d - 1)T_s, k_d T_s$ $[k_d = 1,..., N_d$, sind. Dies kann zum Beispiel durch folgende Vorschriften erreicht werden:

$$t_{k_d}^- = \arg\left[\max_{k'}\left\{t_{k'}^- - \left(k_d - \frac{1}{2}\right)T_s\right\} \leq 0\right], \quad k_d = 1,...,N_d,$$

(3.16)

$$t_{k_d}^+ = \arg\left[\min_{k''}\left\{t_{k''}^+ - t_{k_d}^-\right\} > 0\right], \quad k_d = 1,...,N_d.$$

(3.17)

In Formel (3.16) ist $\left[\max_{k'}\left\{t_{k'}^- - (k_d - 1/2)T_s\right\} < 0\right]$, $k_d = 1,...N_d$, der maximale Wert $t_{k'}^-, k' \in \mathbf{N}$, der gerade noch in die erste Hälfte $[(k_d-1)T_s,(k_d-1/2)T_s]$, $k_d = 1,... N_d$, des Zeitintervalls $[(k_d-1)T_s, k_d T_s [$ fällt. Der direkt auf $t_{k_d}^-, d_d = 1,...,N_d$, folgende Schwellwertdurchgangszeitpunkt $t_{k''}^+, k'' \in \mathbf{N}$, wird nach Formel (3.17) als $t_{k_d}^+, k_d = 1,...N_d$ gewählt.

Da

$$a\left(t_{k_d}^+\right) \approx a\left(t_{k_d}^-\right), \quad k_d = 1,...,N_d,$$

(3.18)

folgt mit Formel (3.7)

$$a_0 = a\left(t_{k_d}^+\right)\sin\left(2\pi f_{IF}t_{k_d}^+ + \varphi\left(t_{k_d}^+\right) + \varphi_n\left(t_{k_d}^+\right)\right), \quad k_d = 1,...,N_d,$$

(3.19)

und

$$-a_0 = a\left(t_{k_d}^+\right)\sin\left(2\pi f_{\mathrm{IF}} t_{k_d}^- + \varphi\left(t_{k_d}^-\right) + \varphi_{\mathrm{n}}\left(t_{k_d}^-\right)\right), \quad k_d = 1,\dots,N_d, \tag{3.20}$$

und daraus

$$2a_0 = a\left(t_{k_d}^+\right)\left\{\sin\left(2\pi f_{\mathrm{IF}} t_{k_d}^+ + \varphi\left(t_{k_d}^+\right) + \varphi_{\mathrm{n}}\left(t_{k_d}^+\right)\right) - \sin\left(2\pi f_{\mathrm{IF}} t_{k_d}^- + \varphi\left(t_{k_d}^-\right) + \varphi_{\mathrm{n}}\left(t_{k_d}^-\right)\right)\right\},$$
$$k_d = 1,\dots,N_d. \tag{3.21}$$

Mit den mittleren Phasen

$$\overline{\varphi}_{k_d} = \frac{\varphi\left(t_{k_d}^+\right) + \varphi\left(t_{k_d}^-\right)}{2}, \tag{3.22}$$

und

$$\overline{\varphi}_{\mathrm{n},k_d} = \frac{\varphi_{\mathrm{n}}\left(t_{k_d}^+\right) + \varphi_{\mathrm{n}}\left(t_{k_d}^-\right)}{2} \tag{3.23}$$

sowie mit den Unterschieden der Phasen

$$\Delta\varphi_{k_d} = \frac{\varphi\left(t_{k_d}^+\right) - \varphi\left(t_{k_d}^-\right)}{2}, \tag{3.24}$$

und

$$\Delta\varphi_{\mathrm{n},k_d} = \frac{\varphi_{\mathrm{n}}\left(t_{k_d}^+\right) - \varphi_{\mathrm{n}}\left(t_{k_d}^-\right)}{2}, \tag{3.25}$$

mit dem Mittelwert der beiden Schwellwertdurchgangszeitpunkte

$$\overline{t}_{k_d} = \frac{t_{k_d}^+ + t_{k_d}^-}{2}.$$

$$(3.26)$$

und mit dem Unterschied der beiden Schwellwertdurchgangszeitpunkte

$$\Delta t_{k_d} = \frac{t_{k_d}^+ - t_{k_d}^-}{2}.$$

$$(3.27)$$

erhält man

$$a_0 = a\left(t_{k_d}^+\right)\cos\left\{2\pi f_{\text{IF}}\overline{t}_{k_d} + \overline{\varphi}_{k_d} + \overline{\varphi}_{n,k_d}\right\}\sin\left\{2\pi f_{\text{IF}}\Delta t_{k_d} + \Delta\varphi_{k_d} + \Delta\varphi_{n,k_d}\right\},$$
$$k_d = 1,...,N_d,$$

$$(3.28)$$

unter Ausnutzung der Identität

$$\sin(\alpha) - \sin(\beta) = 2\cos\left\{\frac{\alpha+\beta}{2}\right\}\sin\left\{\frac{\alpha-\beta}{2}\right\}.$$

$$(3.29)$$

Aus dem oben beschriebenen Prinzip der Schwellwertdurchgangsdetektion folgt, dass $\{2\pi f_{\text{IF}}\overline{t}_{k_d} + \overline{\varphi}_{kd}\}$ stets ein ganzzahliges Vielfaches von $2\pi$ ist. Somit gilt

$$\cos\left\{2\pi f_{\text{IF}}\overline{t}_{k_d} + \overline{\varphi}_{k_d} + \overline{\varphi}_{n,k_d}\right\} = \underbrace{\cos\left\{2\pi f_{\text{IF}}\overline{t}_{k_d} + \overline{\varphi}_{k_d}\right\}}_{=1}\cos\left\{\overline{\varphi}_{n,k_d}\right\}$$
$$- \underbrace{\sin\left\{2\pi f_{\text{IF}}\overline{t}_{k_d} + \overline{\varphi}_{k_d}\right\}}_{=0}\sin\left\{\overline{\varphi}_{n,k_d}\right\},$$
$$= \cos\left\{\overline{\varphi}_{n,k_d}\right\}, \quad k_d = 1,...,N_d.$$

$$(3.30)$$

Dies geht auch aus Fig. 4 hervor. Mit Formel (3.30) wird Formel (3.28) zu

$$a_0 = a\left(t_{k_d}^+\right)\cos\left\{\overline{\varphi}_{n,k_d}\right\}\sin\left\{2\pi f_{\text{IF}}\Delta t_{k_d} + \Delta\varphi_{k_d} + \Delta\varphi_{n,k_d}\right\}, \quad k_d = 1,...,N_d.$$

$$(3.31)$$

Mit Formel (3.8) folgt

$$f_{\mathrm{IF}}\Delta t_{k_d} \ll 1, \tag{3.32}$$

bzw.

$$2\pi f_{\mathrm{IF}}\Delta t_{k_d} \gg \Delta\varphi_{k_d} + \Delta\varphi_{n,k_d}, \tag{3.33}$$

und somit erhält man

$$\sin\left\{2\pi f_{\mathrm{IF}}\Delta t_{k_d} + \Delta\varphi_{k_d} + \Delta\varphi_{n,k_d}\right\} = \sin\left\{2\pi f_{\mathrm{IF}}\Delta t_{k_d}\right\}\underbrace{\cos\left\{\Delta\varphi_{k_d} + \Delta\varphi_{n,k_d}\right\}}_{\approx 1}$$
$$+ \cos\left\{2\pi f_{\mathrm{IF}}\Delta t_{k_d}\right\}\underbrace{\sin\left\{\Delta\varphi_{k_d} + \Delta\varphi_{n,k_d}\right\}}_{\approx 0}$$
$$\approx \sin\left\{2\pi f_{\mathrm{IF}}\Delta t_{k_d}\right\}, \quad k_d = 1,...,N_d. \tag{3.34}$$

Mit Formel (3.34) wird Formel (3.31) zu

$$a_0 \approx a\left(t_{k_d}^+\right)\cos\left\{\overline{\varphi}_{n,k_d}\right\}\sin\left\{2\pi f_{\mathrm{IF}}\Delta t_{k_d}\right\}, \quad k_d = 1,...,N_d, \tag{3.35}$$

und es folgt

$$a\left(t_{k_d}^+\right) \approx \frac{a_0}{\sin\left\{2\pi f_{\mathrm{IF}}\Delta t_{k_d}\right\}\cos\left\{\overline{\varphi}_{n,k_d}\right\}}, \quad k_d = 1,...,N_d. \tag{3.36}$$

Mit

$$\cos\left\{\overline{\varphi}_{n,k_d}\right\} = \sum_{k=0}^{\infty}(-1)^k\frac{\left(\mathrm{mod}\left(\overline{\varphi}_{n,k_d},2\pi\right)\right)^{2k}}{(2k)!} \approx 1 - \frac{\left(\mathrm{mod}\left(\overline{\varphi}_{n,k_d},2\pi\right)\right)^2}{2},$$
$$k_d = 1,...,N_d, \tag{3.37}$$

und mit

$$\frac{1}{1-\frac{\left(\mathrm{mod}\left(\overline{\varphi}_{\mathrm{n},k_{\mathrm{d}}},2\pi\right)\right)^2}{2}}=\sum_{k=0}^{\infty}\left[\frac{\left(\mathrm{mod}\left(\overline{\varphi}_{\mathrm{n},k_{\mathrm{d}}},2\pi\right)\right)^2}{2}\right]^k\approx\left[1+\frac{\left(\mathrm{mod}\left(\overline{\varphi}_{\mathrm{n},k_{\mathrm{d}}},2\pi\right)\right)^2}{2}\right],$$

$$k_{\mathrm{d}}=1,...,N_{\mathrm{d}}. \tag{3.38}$$

folgt aus Formel (3.36)

$$a\left(t_{k_{\mathrm{d}}}^{+}\right)\approx\frac{a_0}{\sin\left\{2\pi f_{\mathrm{IF}}\Delta t_{k_{\mathrm{d}}}\right\}}\cdot\frac{1}{1-\frac{\left(\mathrm{mod}\left(\overline{\varphi}_{\mathrm{n},k_{\mathrm{d}}},2\pi\right)\right)^2}{2}}$$

$$\approx\frac{a_0}{\sin\left\{2\pi f_{\mathrm{IF}}\Delta t_{k_{\mathrm{d}}}\right\}}\cdot\left[1+\frac{\left(\mathrm{mod}\left(\overline{\varphi}_{\mathrm{n},k_{\mathrm{d}}},2\pi\right)\right)^2}{2}\right],\quad k_{\mathrm{d}}=1,...,N_{\mathrm{d}}. \tag{3.39}$$

Da in der Regel gewünschte Dienstgüte typischerweise ein gutes Signal-Stör-Verhältnis benötigt, kann zum Beispiel davon ausgegangen werden, dass

$$\frac{\left(\mathrm{mod}\left(\overline{\varphi}_{\mathrm{n},k_{\mathrm{d}}},2\pi\right)\right)^2}{2}\ll 1,\quad k_{\mathrm{d}}=1,...,N_{\mathrm{d}}, \tag{3.40}$$

ist. Weiterhin folgt

$$\sin\left\{2\pi f_{\mathrm{IF}}\Delta t_{k_{\mathrm{d}}}\right\}\approx 2\pi f_{\mathrm{IF}}\Delta t_{k_{\mathrm{d}}},\quad k_{\mathrm{d}}=1,...,N_{\mathrm{d}}, \tag{3.41}$$

aus Formel (3.32). Mit Formel (3.40) und Formel (3.41) erhält man

$$a\left(t_{k_{\mathrm{d}}}^{+}\right)\approx\frac{a_0}{2\pi f_{\mathrm{IF}}\Delta t_{k_{\mathrm{d}}}},\quad k_{\mathrm{d}}=1,...,N_{\mathrm{d}}, \tag{3.42}$$

aus Formel (3.39). Mit Formel (3.6) erhält man deshalb einen Schätzwert $|\overline{\widehat{d_{k_d}}}|$ für $|\underline{d}_{k_d}|$ nach der Vorschrift

$$\left|\widehat{\underline{d}_{k_d}}\right| \approx \sqrt{\frac{T_s}{2\mathcal{E}_d}} \frac{a_0}{2\pi f_{IF} \Delta t_{k_d}}, \quad k_d = 1,...,N_d. \tag{3.43}$$

Mit Formel (3.26), mit Formel (3.27) und mit Formel (3.43) ergibt sich

$$\varphi_{k_d} p\left(t_k^+ - [k_d-1]T_s\right) + 2\pi f_{IF}\overline{t}_{k_d} + \frac{2\pi f_{IF}\Delta t_{k_d} n'\left(t_k^+\right)}{a_0} + \varphi_0 + \frac{\pi}{2} - 2\pi k \approx 0,$$
$$k_d = 1,...,N_d. \tag{3.44}$$

aus Formel (3.9). Für die Detektion der Phase spielt $2\pi k$ keine Rolle und kann deshalb zu Null gesetzt werden. Dann ergibt sich

$$\varphi_{k_d} = -\frac{2\pi f_{IF}\overline{t}_{k_d} + \varphi_0 + \pi/2}{p\left(t_k^+ - [k_d-1]T_s\right)} - \frac{2\pi f_{IF}\Delta t_{k_d} n'\left(t_k^+\right)}{a_0 p\left(t_k^+ - [k_d-1]T_s\right)}, \quad k_d = 1,...,N_d. \tag{3.45}$$

Ohne Beschränkung der Allgemeinheit kann der Nullphasenwinkel fest zu -π/2 gewählt werden. Ein Schätzwert für die Phase des zu detektierenden Datensymbols ergibt sich zu

$$\widehat{\varphi}_{k_d} = -\frac{2\pi f_{IF}\overline{t}_{k_d}}{p\left(t_k^+ - [k_d-1]T_s\right)}, \quad k_d = 1,...,N_d. \tag{3.46}$$

aus Formel (3.44). Mit Formel (3.43) und mit Formel (3.46) erhält man für das detektierte Datensymbol den folgenden Zusammenhang:

$$\widehat{\underline{d}}_{k_d} \approx \sqrt{\frac{T_s}{2\mathcal{E}_d}} \frac{a_0}{2\pi f_{IF} \Delta t_{k_d}} \cdot \exp\left\{-j\frac{2\pi f_{IF}\overline{t}_{k_d}}{p\left(t_k^+ - [k_d-1]T_s\right)}\right\}, \quad k_d = 1,...,N_d. \tag{3.47}$$

Die bisher hergeleitete Schwellwertdurchgangsdetektion beruht auf algebraischen Zusammenhängen. Eine Weiterentwicklung im Hinblick auf optimale Empfänger unter Anwendung stochastischer Prinzipien, wie dies u.a. in "Scholand, T.: Entwurf und Realisierung von multistandardfähigen Nulldurchgangsempfängerstrukturen für die drahtlose Kommunikationstechnik, Fachgebiet Kommunikationstechnik, Fakultät Ingenieurwissenschaften der Universität Duisburg-Essen, Dissertation. Aachen: Shaker Verlag, 2007. ISBN: 978-3-8322-5815-3." erfolgte, ist denkbar. Die algebraisch hergeleitete Schwellwertdurchgangsdetektion erlaubt beispielsweise eine kohärente Empfängerstruktur und deshalb kann die untere Schranke des Bitfehlerverhältnisses durch die kohärente Detektion gegeben werden.

Einige Ausführungsbeispiele gemäß der Erfindung beziehen sich auf eine Wahl des Skalierungsfaktors. Der Skalierungsfaktor $\zeta_{f_{lF}}$ (siehe Formel (3.12)) muss so gewählt werden, dass für alle Symbole des Signalraums $\underline{D}(M)$ mindestens ein Durchgang des Schwellwertes $a_0$ aus Formel (3.12) statt findet. Die günstige Wahl des Skalierungsfaktors $\zeta_{f_{lF}}$ hängt deshalb beispielsweise sowohl von der Anzahl der Stufen $M$ der verwendeten Modulationsart als auch von den verwendeten Sende- und Empfangsfiltern ab.

Im Folgenden wird angenommen, dass sich die Anzahl der Stufen $M$ der verwendeten Modulationsart als Zweierpotenz einer Zahl $2v, v \in \mathbf{N}$, ausdrücken lässt:

$$M = 2^{2v}, \quad v \in \mathbb{N}. \qquad (3.48)$$

Dies ist beispielsweise bei sechzehnstufiger Quadraturamplitudenmodulation (16-QAM) und vierundsechzigstufiger Quadraturamplitudenmodulation (64-QAM) der Fall. Für 16-QAM ist $v$ gleich zwei, für 64-QAM ist $v$ gleich drei.

$2^{2v}$-QAM hat eine quadratische Signalkonstellation mit $\sqrt{M}$ gleich $2^v$, $v \in \mathbf{N}$, reellen und ebenso vielen imaginären Stufen (siehe "Molisch, A.: Wireless Communications. Chichester : IEEE Press - Sohn Wiley & Sons, November 2005, ISBN : 0-470-84888-X."). Diese Stufen $d_m(M)$ ergeben sich beispielsweise aus der Vorschrift

$$d_m(M) = \frac{2m - 1 - \sqrt{M}}{\sqrt{P(M)}}, \quad \forall m \in \left\{ 1, 2, ..., \sqrt{M} \right\} \qquad (3.49)$$

(siehe "Molisch, A.: Wireless Communications. Chichester : IEEE Press - Sohn Wiley & Sons, November 2005, ISBN : 0-470-84888-X."). Der Normierungsfaktor $1/\sqrt{P(M)}$ kann gemäß

$$P(M) = \frac{2}{\sqrt{M}} \sum_{m=1}^{\sqrt{M}} \left( 2m - 1 - \sqrt{M} \right)^2$$
$$= \frac{2}{3}(M - 1) \qquad (3.50)$$

ermittelt werden. Für 16-QAM gilt $P(16)$ gleich 10, und für 64-QAM gilt $P(64)$ gleich 42.

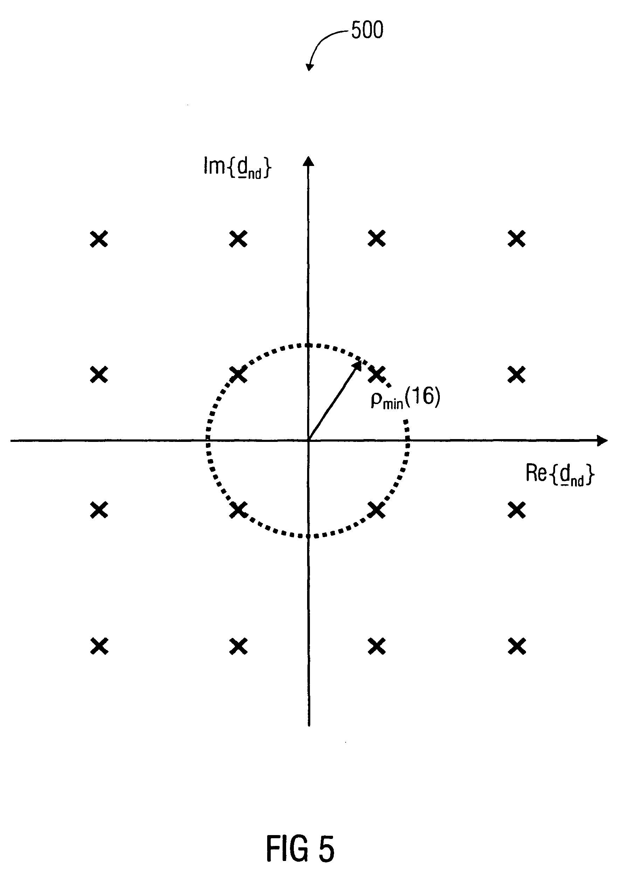

Weiterhin sei mit $\rho_{min}(M)$ die minimale Norm der auf $1/\sqrt{P(M)}$ normierten Signalkonstellation. Dies wird in Fig. 5 als Beispiel 500 für den Fall der 16-QAM veranschaulicht. Für $\rho_{min}(M)$ gilt allgemein der Zusammenhang

$$\rho_{min}(M) = \sqrt{\frac{2}{P(M)}} = \sqrt{\frac{3}{M - 1}}. \qquad (3.51)$$

Für den Fall der 16-QAM ist die minimale Norm $\rho_{min}(16)$ gleich $1/\sqrt{5}$. Für den Fall der 64-QAM ist minimale Norm $\rho_{min}(64)$ $1/\sqrt{21}$. .

Lässt sich die Anzahl der Stufen $M$ nicht als Zweierpotenz einer geraden Zahl darstellen, so ergibt sich keine quadratische Signalkonstellation im Signalraum. Die 32-Kreuz-QAM hat beispielsweise den folgenden Signalraum:

$$\mathcal{D}(32) = \left\{ (2m-7) + \mathrm{j}(2n-7) \,\middle|\, m,n = 1,2,\ldots,6 \right\}$$
$$\setminus \left\{ (-5-5\mathrm{j}), (-5+5\mathrm{j}), (+5-5\mathrm{j}), (+5+5\mathrm{j}) \right\}. \tag{3.52}$$

Um die 32-Kreuz-QAM zu erzeugen, dürfen nach Formel (3.52) $m$ und $n$ nicht gleichzeitig aus der Menge {1,6} gewählt werden.

Wegen

$$P(32) = \frac{1}{32}\left[ \sum_{m=1}^{6}\sum_{n=1}^{6}\left\{ (2m-7)^2 + (2n-7)^2 \right\} - 4\cdot 50 \right]$$
$$= \frac{1}{32}\left[ \sum_{m=1}^{6}\left\{ 6\cdot(2m-7)^2 + 70 \right\} - 4\cdot 50 \right]$$
$$= \frac{1}{32}\left( 12\cdot 70 - 4\cdot 50 \right) = 20 \tag{3.53}$$

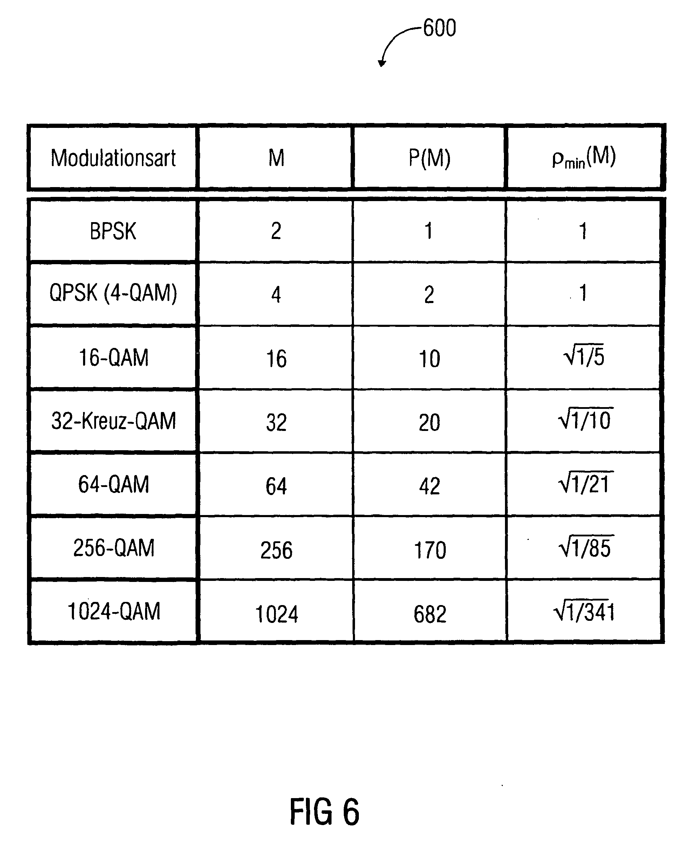

ist der Normierungsfaktor $1/\sqrt{P(32)}$ gleich $1/\sqrt{20}$ und $\rho_{min}(32)$ ist gleich $1/\sqrt{10}$. Fig. 6 zeigt dazu eine Tabelle 600, die die erhaltenen Ergebnisse für verschiedene Modulationsarten beispielhaft zusammenfasst.

In drahtlosen Kommunikationssystemen werden beispielsweise Signale mit einer endlichen Bandbreite eingesetzt. Die senderseitige und die empfängerseitige Bandbegrenzung kann mit Filtern erfolgen. Von besonderem Interesse sind zum Beispiel Filter mit Wurzel-Kosinus-Charakteristik (engl. Root-Raised Cosine, RRC, siehe z.B. "3d Generation Partnership Project, Technical Specification Group GSM/EDGE Radio Access Network: Feasibility study for evolved GSM/EDGE Radio Access Network (GERAN). Release 7, 3GPP TR 45.912, Version 7.2.0, Tune 2007.", "3rd Generation Partnership Project, Technical Specification Group Radio Access Network: User Equipment (UE) radio transmission and reception (FDD). Release 6, 3GPP TS 25.101, Version 6.15.0, September 2007."). Solche Filter heißen kurz RRC-Filter. Durch einen senderseitigen Einsatz des RRC-Filters und einen empfängerseitigen Einsatz eines einfachen Empfangsfilters, dessen Impulsantwort der ersten Nyquist-Bedingung genügt können beispielsweise einfache Empfängerarchitekturen berücksichtigt werden.

Das im Sender verwendete RRC-Filter hat zum Beispiel die Impulsantwort

$$h_{\mathrm{RRC}}(t) = \frac{4\alpha\,\dfrac{t}{T_{\mathrm{symbol}}}\cos\left\{\pi(1+\alpha)\dfrac{t}{T_{\mathrm{symbol}}}\right\} + \sin\left\{\pi(1-\alpha)\dfrac{t}{T_{\mathrm{symbol}}}\right\}}{\left\{1 - \left(4\alpha\dfrac{t}{T_{\mathrm{symbol}}}\right)^2\right\}\pi\dfrac{t}{T_{\mathrm{symbol}}}}. \tag{3.54}$$

Der Parameter $\alpha$ wird Roll-Off-Faktor genannt. Das Maximum der Impulsantwort $h_{\mathrm{RRC}}(t)$ wird an der Stelle $t$

gleich 0 erreicht und beträgt

$$h_{\mathrm{RRC}}(0) = \frac{4\alpha + \pi(1-\alpha)}{\pi}.$$

(3.55)

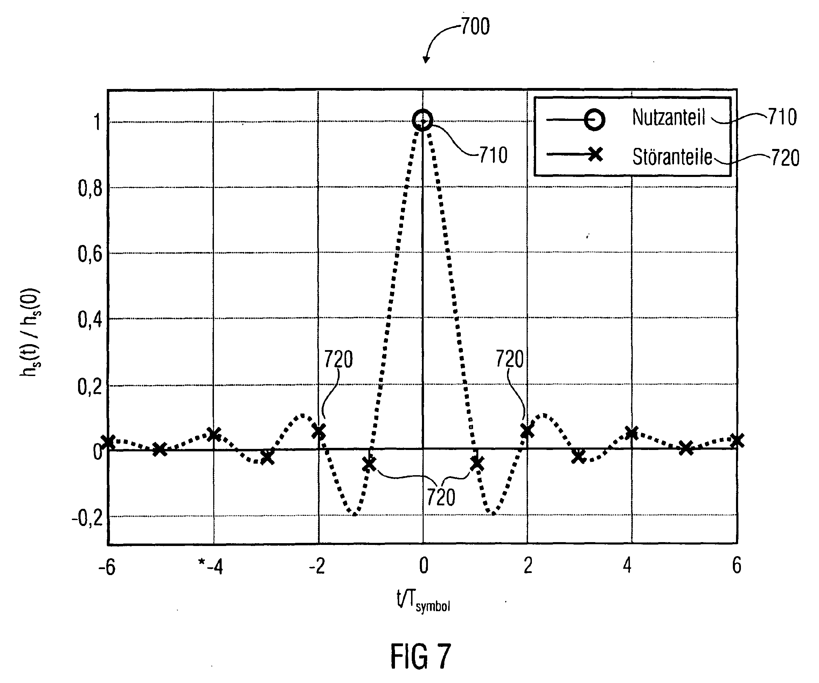

Fig. 7 zeigt die normierte Impulsantwort 700 des RRC-Filters.

$$\frac{h_{\mathrm{RRC}}(t)}{h_{\mathrm{RRC}}(0)} = \frac{4\alpha \dfrac{t}{T_{\mathrm{symbol}}} \cos\left\{\pi(1+\alpha)\dfrac{t}{T_{\mathrm{symbol}}}\right\} + \sin\left\{\pi(1-\alpha)\dfrac{t}{T_{\mathrm{symbol}}}\right\}}{\{4\alpha + \pi(1-\alpha)\}\left[1 - \left(4\alpha \dfrac{t}{T_{\mathrm{symbol}}}\right)^2\right]\dfrac{t}{T_{\mathrm{symbol}}}}$$

(3.56)

für $\alpha$ gleich 0,22. Diese Wahl des Roll-Off-Faktors $\alpha$ wird zum Beispiel in GERAN und UMTS (universal mobile telecommunication system, universelles Mobiltelekommunikationssystem) getroffen. Das RRC-Filter erfüllt die erste Nyquist-Bedingung nicht. Der Einsatz des RRC-Filters führt deshalb zu Intersymbolinterferenzen. Diejenigen Anteile der Wurzel-Kosinus-Charakteristik, welche im Empfangssignal nach Formel (3.6) Intersymbolinterferenzen verursachen, sind in Fig. 7 mit einem "x" markiert. Diese Anteile werden als Störanteile 720 bezeichnet. Der gewünschte Nutzanteil 710 der Wurzel- Kosinus-Charakteristik im Empfangssignal nach Formel (3.6) ist in Fig. 7 mit einem "o" markiert. Das vom Roll-Off-Faktor $\alpha$ abhängige Verhältnis des Nutzanteils 710 zur Summe der Störanteile 720 ist

$$\gamma_{\mathrm{RRC}}(\alpha) = \frac{4\alpha + \pi(1-\alpha)}{\pi \displaystyle\sum_{k=-\infty}^{\infty} (-1)^k \, h_{\mathrm{RRC}}(k \cdot T_{\mathrm{symbol}}) - 4\alpha - \pi(1-\alpha)}.$$

(3.57)

Mit

$$h_{\mathrm{RRC}}(kT_{\mathrm{symbol}}) = \frac{4\alpha k \cos\{\pi(1+\alpha)k\} + \sin\{\pi(1-\alpha)k\}}{\{1 - (4\alpha k)^2\}\pi k}, \quad k \in \mathbb{Z},$$

(3.58)

folgt

$$\gamma_{\mathrm{RRC}}(\alpha) = \frac{1}{\pi \displaystyle\sum_{k=-\infty}^{\infty} (-1)^k \dfrac{4\alpha k \cos\{\pi(1+\alpha)k\} + \sin\{\pi(1-\alpha)k\}}{\{4\alpha + \pi(1-\alpha)\}\{1 - (4\alpha k)^2\}\pi k} - 1}$$

(3.59)

aus Formel (3.57)

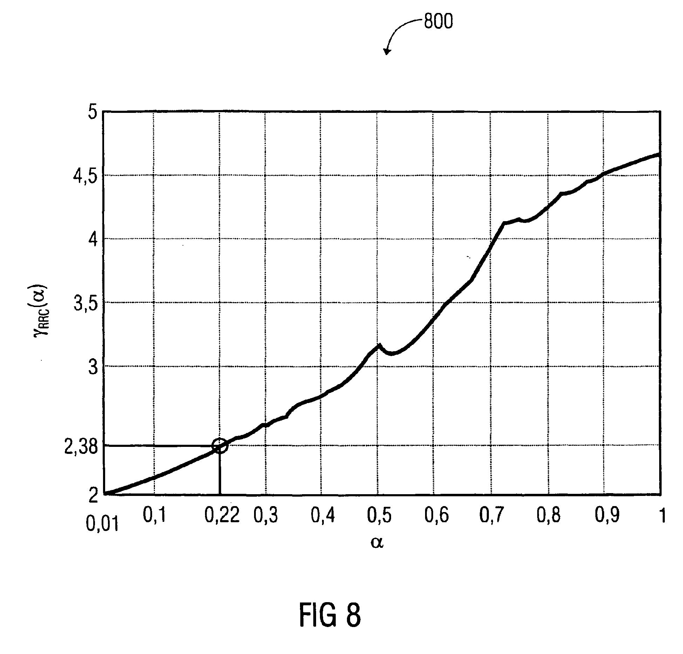

Fig. 8 zeigt $\gamma_{\mathrm{RRC}}(\alpha)$ 800 in Abhängigkeit vom Roll-Off-Faktor $\alpha$. Erwartungsgemäß verringert sich der Einfluss der Störanteile mit steigendem Roll-Off-Faktor $\alpha$ und $\gamma_{\mathrm{RRC}}(\alpha)$ wächst ebenfalls. Es ist jedoch davon auszugehen, dass die Wahl der Impulsantwort $h_{\mathrm{RRC}}(t)$ nach Formel (3.54) zu numerischen Ungenauigkeiten führt.

Diese sind für die Abweichung von $\gamma_{\mathrm{RRC}}(\alpha)$ von einem streng monotonen Verlauf verantwortlich. Da diese numerischen Ungenauigkeiten jedoch in realen Systemen unvermeidlich wären, werden sie an dieser Stelle und somit auch in Fig. 8 nicht bereinigt. Für den Roll-Off-Faktor $\alpha$ gleich 0,22 ergibt sich $\gamma_{\mathrm{RRC}}$ zu etwa 2,38.

Das Verhältnis $(1-1/\gamma_{\mathrm{RRC}}(\alpha))$ mit $\gamma_{\mathrm{RRC}}(\alpha)$ nach Formel (3.59) ist kann maßgeblich für die Bestimmung des Skalierungsfaktors $\zeta_{f_{IF}}$ sein. Es verringert die minimale Norm $\rho_{\min}(M)$ der auf $1/\sqrt{P(M)}$ normierten Signalkonstellation. Deshalb sollte der gewählte Skalierungsfaktor die Ungleichung

$$\zeta_{f_{\mathrm{IF}}} < \rho_{\min}(M)\left(1 - \frac{1}{\gamma_{\mathrm{RRC}}(\alpha)}\right) \qquad (3.60)$$

erfüllen.

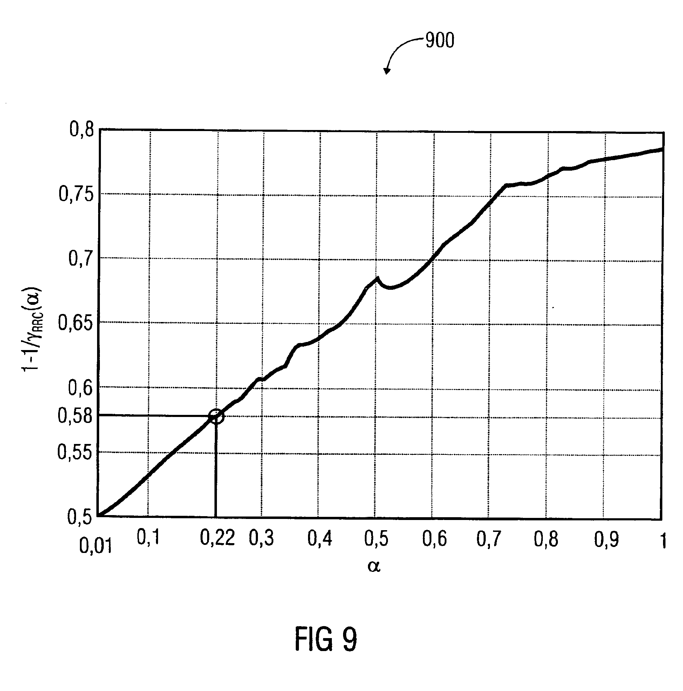

In Fig. 9 ist $(1-1/\gamma_{\mathrm{RRC}}(\alpha))$ 900 in Abhängigkeit vom Roll-Off-Faktor $\alpha$ gezeigt. Erwartungsgemäß wächst $1-1/\gamma_{\mathrm{RRC}}(\alpha))$ mit zunehmendem Roll-Off-Faktor $\alpha$. Der Einfluss der bereits erwähnten numerischen Ungenauigkeiten ist in Fig. 9 ebenfalls zu sehen. Für den Roll-Off-Faktor $\alpha$ gleich 0,22 ist $(1-1/\gamma_{\mathrm{RRC}}(\alpha))$ etwa gleich 0,58.

Im Folgenden soll die Leistungsfähigkeit der entworfenen Schwellwertdurchgangsdetektion nachgewiesen bzw. der Kommunikationsendgeräte mit der neuartiger irregulärer Signaldarstellung gezeigt werden. Dies erfolgt am Beispiel der zurzeit wichtigen höherstufigen Modulationsarten 16-QAM, 32-Kreuz- QAM und 64-QAM.

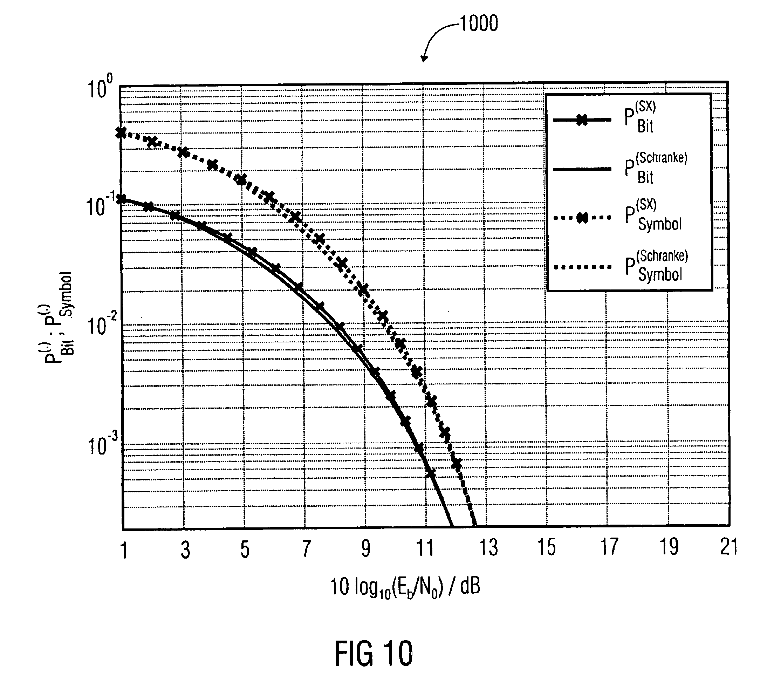

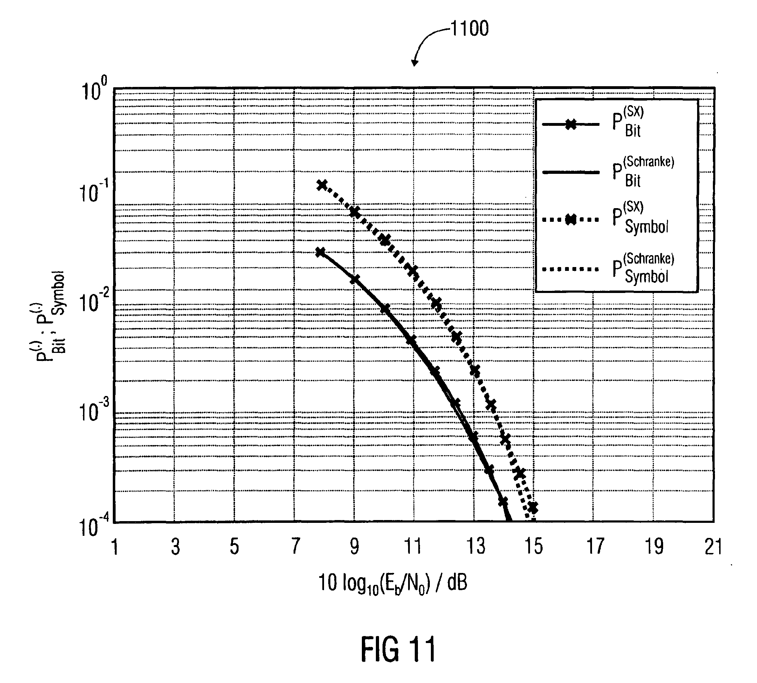

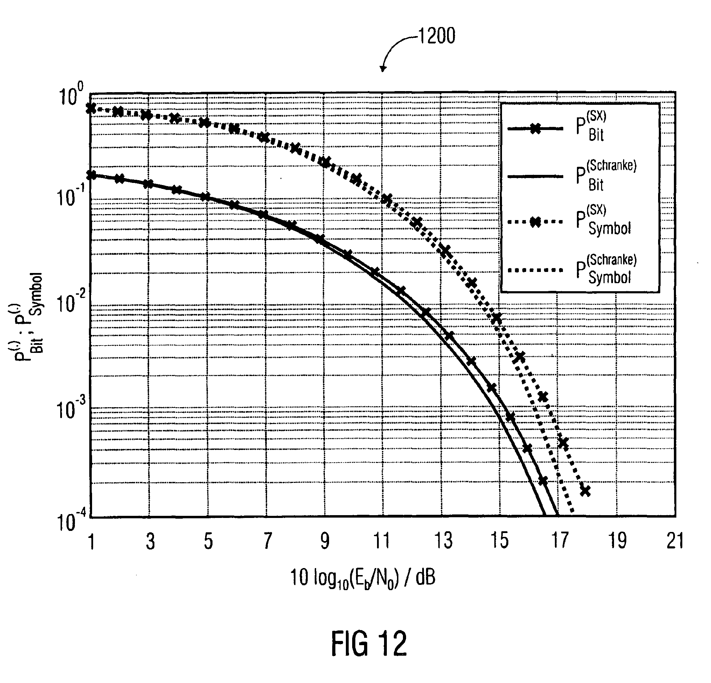

Zunächst werden jeweils das durch den Einsatz der Schwellwertdurchgangsdetektion erzielbare Bitfehlerverhältnis $P_{\mathrm{Bit}}^{(\mathrm{SX})}$ und das zugehörige Symbolfehlerverhältnis $P_{\mathrm{Symbol}}^{(\mathrm{SX})}$ in Abhängigkeit vom Signal-Stör-Verhältnis $10\log_{10}(E_b/N_0)$ in dB betrachtet. Das erzielbare Bitfehlerverhältnis $P_{\mathrm{Bit}}^{(\mathrm{SX})}$ und das zugehörige Symbolfehlerverhältnis $P_{\mathrm{Symbol}}^{(\mathrm{SX})}$ wurden mit Simulationen ermittelt. Der Einsatz der Schwellwertdurchgangsdetektion wird in den nachstehend gezeigten Figuren und den jeweils verwendeten Größen durch das Superskript "(SX)" angezeigt. Es wird angenommen, dass die Übertragung über einen schwundfreien Einwegekanal stattfindet. Diese Annahme ist zum Beispiel vor dem Hintergrund einer senderseitigen gemeinsamen Sendens gerechtfertigt. Empfängerseitig wird von einer additiven normalverteilten Störung (AWGN) ausgegangen. Im Sender wird das im vorangegangenen betrachtete RRC-Filter mit dem Roll-Off-Faktor $\alpha$ gleich 0,22 verwendet, der Empfänger verwendet ein Empfangsfilter, dessen Impulsantwort die erste Nyquist-Bedingung erfüllt. In Fig. 10, Fig. 11 und Fig. 12 sind diese Ergebnisse 1000, 1100, 1200 zusammengefasst. Die Zwischenfrequenz ist $f_{\mathrm{IF}}$ gleich 20 $B$. Der Skalierungsfaktor $\zeta_{f_{IF}}$ beträgt 0,1. Die Zeitpunkte der Schwellwertdurchgänge wurden linear approximiert, um die Quantisierung der Zeit zunächst zu vermeiden.

Die Simulationsergebnisse werden den theoretisch erreichbaren unteren Schranken für die kohärente Datendetektion gegenüber gestellt. Die entsprechenden Größen werden mit dem Superskript "(Schranke)" versehen.

Zunächst werden die theoretisch erreichbaren unteren Schranken nachstehend angegeben. Mit der Abkürzung

$$Q\left(\sqrt{2x}\right) = \frac{1}{2}\cdot\mathrm{erfc}\left(\sqrt{x}\right), \quad x \in \mathbb{R}_0^+, \qquad (3.61)$$

für die gewichtete komplementäre Fehlerfunktion erfc $\left(\sqrt{x}\right)$ ist die Symbolfehlerwahrscheinlichkeit für $M$-QAM mit $M$ nach Formel (3.48) gemäß "Proakis, J, G.: Digital Communications. Zweite Auflage, New York: McGraw-Hill, 1989." gleich

$$P^{(\text{Schranke})}_{\text{Symbol},M\text{-QAM}} = 4 \cdot \left(1 - \frac{1}{\sqrt{M}}\right) \cdot Q\left(\sqrt{\frac{3 \cdot \log_2(M)}{M-1} \cdot \frac{E_b}{N_0}}\right) \cdot$$

$$\left[1 - \left(1 - \frac{1}{\sqrt{M}}\right) \cdot Q\left(\sqrt{\frac{3 \cdot \log_2(M)}{M-1} \cdot \frac{E_b}{N_0}}\right)\right] \cdot \qquad (3.62)$$

Für 16-QAM gilt somit

$$P^{(\text{Schranke})}_{\text{Symbol},16\text{-QAM}} = 3 \cdot Q\left(\sqrt{\frac{4}{5} \cdot \frac{E_b}{N_0}}\right) \cdot \left[1 - \frac{3}{4} \cdot Q\left(\sqrt{\frac{4}{5} \cdot \frac{E_b}{N_0}}\right)\right] \cdot \qquad (3.63)$$

und für 64-QAM erhält man

$$P^{(\text{Schranke})}_{\text{Symbol},64\text{-QAM}} = \frac{7}{2} \cdot Q\left(\sqrt{\frac{2}{7} \cdot \frac{E_b}{N_0}}\right) \cdot \left[1 - \frac{7}{8} \cdot Q\left(\sqrt{\frac{2}{7} \cdot \frac{E_b}{N_0}}\right)\right] \qquad (3.64)$$

Wenngleich analytisch exakte Ergebnisse für die Bitfehlerwahrscheinlichkeit für $M$-QAM mit $M$ nach Formel (3.48) leicht zu bestimmen sind, so werden die gefunden Ausdrucke im Allgemeinen recht unhandlich. Eine hervorragende Näherung für den technisch relevanten Fall $10\log_{10}(E_b/N_0) \geq 10\text{dB}$ erhält man aus Formel (3.62) gemäß

$$P^{(\text{Schranke})}_{\text{Bit},M\text{-QAM}} \approx \frac{4}{\log_2(M)} \cdot \left(1 - \frac{1}{\sqrt{M}}\right) \cdot Q\left(\sqrt{\frac{3 \cdot \log_2(M)}{M-1} \cdot \frac{E_b}{N_0}}\right) \cdot$$

$$\left[1 - \frac{1}{\log_2(M)} \cdot \left(1 - \frac{1}{\sqrt{M}}\right) \cdot Q\left(\sqrt{\frac{3 \cdot \log_2(M)}{M-1} \cdot \frac{E_b}{N_0}}\right)\right] \qquad (3.65)$$

Für 16-QAM gilt somit

$$P^{(\text{Schranke})}_{\text{Bit},16\text{-QAM}} \approx \frac{3}{4} \cdot Q\left(\sqrt{\frac{4}{5} \cdot \frac{E_b}{N_0}}\right) \cdot \left[1 - \frac{3}{16} \cdot Q\left(\sqrt{\frac{4}{5} \cdot \frac{E_b}{N_0}}\right)\right] \qquad (3.66)$$

und für 64-QAM erhält man

$$P_{\text{Bit,64-QAM}}^{(\text{Schranke})} \approx \frac{7}{12} \cdot Q\left(\sqrt{\frac{2}{7} \cdot \frac{E_b}{N_0}}\right) \cdot \left[1 - \frac{7}{48} \cdot Q\left(\sqrt{\frac{2}{7} \cdot \frac{E_b}{N_0}}\right)\right]$$

(3.67)

Die Symbolfehlerwahrscheinlichkeit von 32-Kreuz-QAM wurde in "Beaulieu, N. C.; Chen, Y. Closed-Form Expressions for the Exact Symbol Error Probability of 32-Cross-QAM in AWGN and in Slow Nakagami Fading. IEEE Communications Letters, Bd. 11 (2007), S. 310-312." exakt bestimmt. Es gilt

$$P_{\text{Symbol,32-Kreuz-QAM}}^{(\text{Schranke})} = \frac{1}{32} \cdot \left[4 \cdot Q\left(\sqrt{\frac{E_b}{N_0}}\right) + 104 \cdot Q\left(\sqrt{\frac{E_b}{2 \cdot N_0}}\right) - 92 \cdot Q^2\left(\sqrt{\frac{E_b}{2 \cdot N_0}}\right)\right]$$

(3.68)

Die mittlere Bitfehlerwahrscheinlichkeit von 32-Kreuz-QAM wurde in "Vitthaiadevuni, P, K ; Alouini, M. S. ; Kieffer, J. C.: Exact BER Computation for Cross QAM Constellations. IEEE Transactions on Wireless Communications, Bd. 4 (2005), S. 3039-3050." exakt berechnet und wird im Rahmen dieser Arbeit als Referenz verwendet. Wegen der Unübersichtlichkeit der exakten Lösung und da die von Smith angegebene Näherung für $10\log_{10}(E_b/N_0) \geq 10$dB sehr gut mit der exakten Lösung übereinstimmt (siehe "Beaulieu, N. C. ; Chen, Y. Closed-Form Expressions for the Exact Symbol Error Probability of 32-Cross-QAM in AWGN and in Slow Nakagami Fading. IEEE Communications Letters, Bd. 11 (2007), S. 310-312."), wird die Näherung von Smith angegeben:

$$P_{\text{Symbol,32-Kreuz-QAM}}^{(\text{Schranke})} \approx \frac{109}{96} \cdot \frac{13}{4} \cdot \frac{1}{5} \cdot Q\left(\sqrt{\frac{E_b}{N_0}}\right) = \frac{1417}{1920} \cdot Q\left(\sqrt{\frac{E_b}{N_0}}\right)$$

(3.69)

.

Im Folgenden wird der Einfluss der Wahl der Zwischenfrequenz $f_{\text{IF}}$ auf die Übertragungsqualität betrachtet. Die Wahl des Skalierungsfaktors $\zeta_{f_{IF}}$ ist ein Parameter. Die Erhöhung der Zwischenfrequenz $f_{\text{IF}}$ führt zur Zunahme der Anzahl der gezählten Schwellwertdurchgänge pro Datensymbol. Dies führt zur Verringerung der Fehlerwahrscheinlichkeit bei der Datendetektion bis schließlich die theoretischen Schranken, siehe Formel (3.62) bis Formel (3.69), erreicht werden.

In Fig. 10, 11 und 12 zeigt es sich, dass die Schwellwertdurchgangsdetektion keine nennenswerten Obertragungsnachteile mit sich bringt. Die Erhöhung der Zwischenfrequenz erlaubt die beliebig enge Annäherung der mit der Schwellwertdetektion erreichbaren Übertragungsqualität an die theoretischen Grenzen kohärenter Empfänger. Dies wird im Folgenden genauer erläutert.

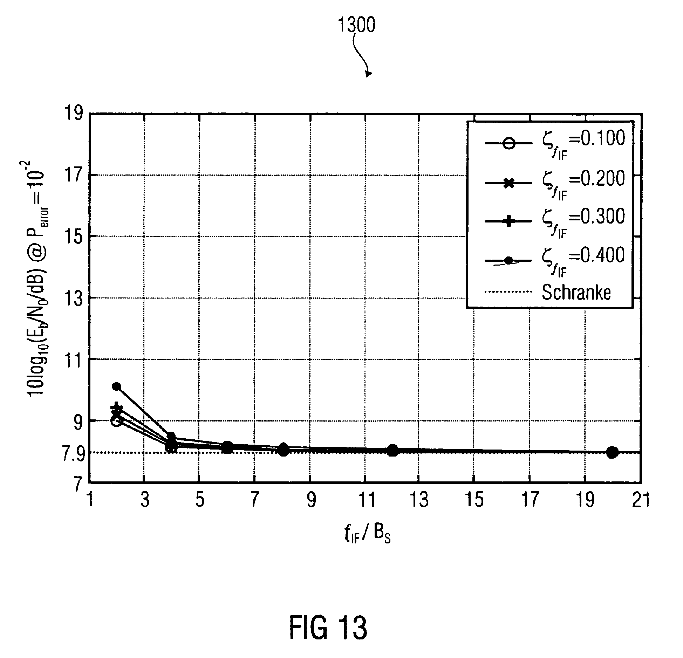

Fig. 13 zeigt das im Falle von 16-QAM und der Schwellwertdurchgangsdetektion für das Erreichen des Bitfehlerverhältnisses $10^{-2}$ benötigte Signal-Stör-Verhältnis $10\log_{10}(E_b/N_0)$ in dB in Abhängigkeit von der Zwischenfrequenz $f_{\text{IF}}$. Für die Ermittlung der dargestellten Simulationsergebnisse 1300 wurde der Skalierungsfaktor $\zeta_{f_{IF}}$ variiert, und es wurden die Werte $\zeta_{f_{IF}} = 0$, 1, $\zeta_{f_{IF}} = 0{,}2$, $\zeta_{f_{IF}} = 0{,}3$ und $\zeta_{f_{IF}} = 0$, 4 betrachtet. Nach Formel (3.60) sollte der Skalierungsfaktor $\zeta_{f_{IF}}$ im Falle von 16-QAM nicht größer als rund 0,26 sein. Außerdem ist der aus Formel (3.66) bestimmte Wert, der für die theoretische Schranke an der Stelle $P_{\text{Bit,16-QAM}}^{|\text{Schranke}|}$ gleich $10^{-2}$ gilt und ungefähr gleich 7,9 dB beträgt, eingezeichnet.

Für einen festen Skalierungsfaktor $\zeta_{f_{IF}}$ zeigt sich zunächst, dass das für das Erreichen des Bitfehlerverhältnisses $10^{-2}$ benötigte Signal-Stör-Verhältnis $10\log_{10}(E_b/N_0)$ mit wachsender Zwischenfrequenz $f_{\text{IF}}$ erwartungsgemäß sinkt. Für

den Fall $\zeta_{f_{IF}}$<0,26 verringert sich der Wert $10\log_{10}(E_b/N_0)$ mit zunehmender Zwischenfrequenz $f_{IF}$, bis zum Wert $\approx$7,9 dB der theoretischen Schranke. Dies ist für $\zeta_{f_{IF}}$=0,1 und für $\zeta_{f_{IF}}$=0,2 gegeben. Ist jedoch $\zeta_{f_{IF}}$>0,26, so sinkt zwar das für das Erreichen des Bitfehlerverhältnisses $10^{-2}$ benötigte Signal-Stör-Verhältnis $10\log_{10}(E_b/N_0)$ mit wachsender Zwischenfrequenz $f_{IF}$; jedoch wird der Wert $\approx$7,9 dB der unteren Schranke nicht erreicht. Der Wert $\approx$7,9 dB wird umso stärker verfehlt, je größer der Skalierungsfaktor $\zeta_{f_{IF}}$, $\zeta_{f_{IF}}$ >0, 26, ist. Für eine gegebene Zwischenfrequenz $f_{IF}$ wächst das für das Erreichen des Bitfehlerverhältnisses $10^{-2}$ benötigte Signal-Stör-Verhältnis $10\log_{10}(E_b/N_0)$ mit zunehmendem Skalierungsfaktor $\zeta_{f_{IF}}$.

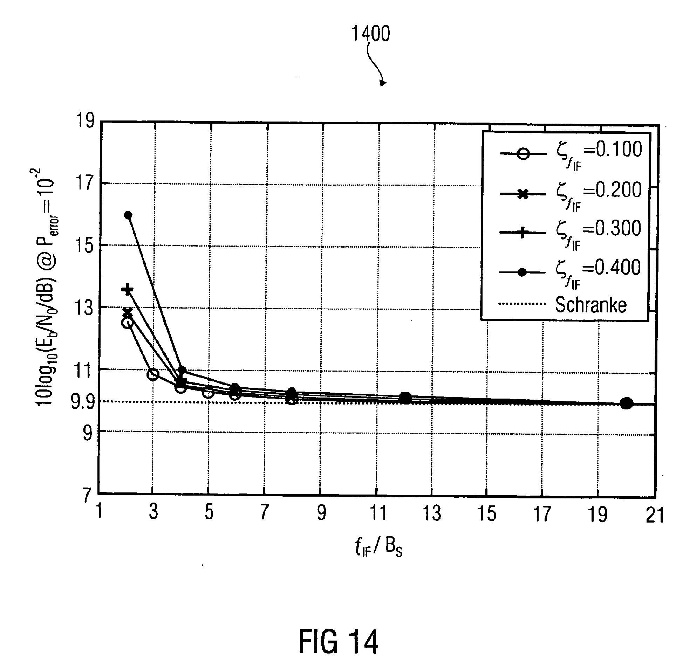

In Analogie zu Fig. 13 stellt Fig. 14 das im Falle von 32-Kreuz-QAM und der Schwellwertdurchgangsdetektion für das Erreichen des Bitfehlerverhältnisses $10^{-2}$ benötigte Signal-Stör-Verhältnis $10\log_{10}(E_b/N_0)$ in dB in Abhängigkeit von der Zwischenfrequenz $f_{IF}$ dar. Erneut wurde der Skalierungsfaktor $\zeta_{f_{IF}}$ bei die Ermittlung der dargestellten Simulationsergebnisse 1400 variiert, und es wurden die Werte $\zeta_{f_{IF}}$=0,1, $\zeta_{f_{IF}}$ =0,2, $\zeta_{f_{IF}}$ =0,3, $\zeta_{f_{IF}}$ =0,4 betrachtet. Gemäß Formel (3.60) sollte $\zeta_{f_{IF}}$ im Falle von 32-Kreuz-QAM nicht größer als rund 0,18 sein. Der ebenfalls in Fig. 14 aufgetragene Wert, der für die theoretische Schranke gemäß Formel (3.69) an der Stelle $P^{\text{Schranke}}_{\text{Bit,32-Kreuz-QAM}}$ $P$ gleich $10^{-2}$ gilt, beträgt $\approx$9,9 dB. Erneut zeigt sich für einen festen Skalierungsfaktor $\zeta_{f_{IF}}$, dass das für das Erreichen des Bitfehlerverhältnisses $10^{-2}$ benötigte Signal-Stör-Verhältnis $10\log_{10}(E_b/N_0)$ mit wachsender Zwischenfrequenz $f_{IF}$ erwartungsgemäß sinkt. Für den Fall $\zeta_{f_{IF}}$<0,18 verringert sich der Wert $10\log_{10}(E_b/N_0)$ mit zunehmender Zwischenfrequenz $f_{IF}$ und nähert sich dem Wert $\approx$9,9 dB der theoretischen Schranke. Der Wert $\approx$9,9 dB der theoretischen Schranke wird für $f_{IF}\rightarrow\infty$ erreicht, siehe $\zeta_{f_{IF}}$=0,1. Ist jedoch $\zeta_{f_{IF}}$>0,18, so sinkt zwar das für das Erreichen des Bitfehlerverhältnisses $10^{-2}$ benötigte Signal-Stör-Verhältnis $10\log_{10}(E_b/N_0)$ mit wachsender Zwischenfrequenz $f_{IF}$; jedoch wird der Wert $\approx$9,9 dB der unteren Schranke nicht erreicht. Der Wert $\approx$9,9 dB wird umso stärker verfehlt, je größer der Skalierungsfaktor $\zeta_{f_{IF}}$, $\zeta_{f_{IF}}$>0,18, ist. Für eine gegebene Zwischenfrequenz $f_{IF}$ wächst das für das Erreichen des Bitfehlerverhältnisses $10^{-2}$ benötigte Signal-Stör-Verhältnis $10\log_{10}(E_b/N_0)$ mit zunehmendem Skalierungsfaktor $\zeta_{f_{IF}}$.

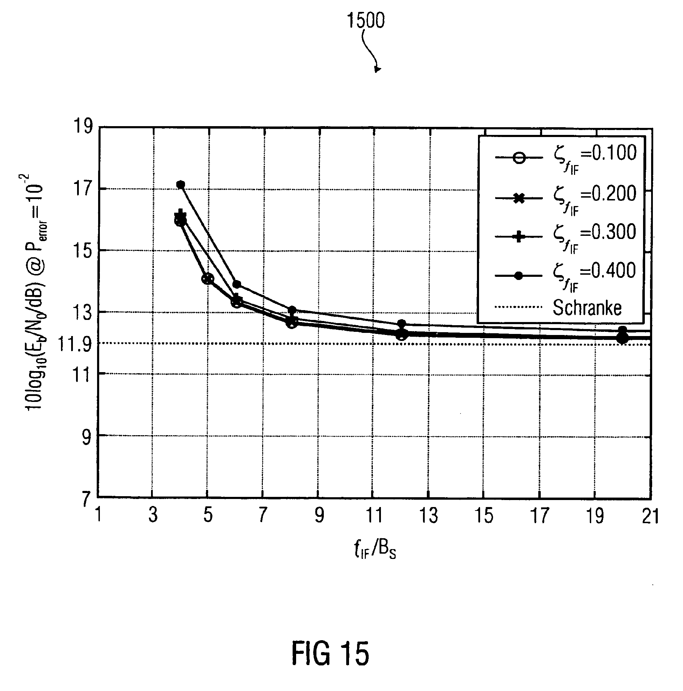

Schließlich präsentiert Fig. 15 das im Falle von 64-QAM und der Schwellwertdurchgangsdetektion für das Erreichen des Bitfehlerverhältnisses $10^{-2}$ benötigte Signal-Stör-Verhältnis $10\log_{10}(E_b/N_0)$ in dB in Abhängigkeit von der Zwischenfrequenz $f_{IF}$. Abermals wurde der Skalierungsfaktor $\zeta_{f_{IF}}$ bei die Ermittlung der dargestellten Simulationsergebnisse 1500 variiert, und es wurden die Werte $\zeta_{f_{IF}}$=0, 1, $\zeta_{f_{IF}}$=0,2, $\zeta_{f_{IF}}$ =0,3 und $\zeta_{f_{IF}}$ =0,4 betrachtet. Gemäß Formel (3.60) sollte $\zeta_{f_{IF}}$ im Falle von 64-QAM nicht größer als rund 0,13 sein. Der zudem in Fig. 15 eingezeichnete Wert, der für die theoretische Schranke gemäß Formel (3.67) an der Stelle $P^{\text{Schranke}}_{\text{Bit,64-QAM}}$ gleich $10^{-2}$ gilt, beträgt $\approx$11,9 dB. Wiederum zeigt sich für einen $\zeta_{f_{IF}}$, dass das für das Erreichen des Bitfehlerverhältnisses $10^{-2}$ benötigte Signal-Stör-Verhältnis $10\log_{10}(E_b/N_0)$ mit wachsender Zwischenfrequenz $f_{IF}$ erwartungsgemäß sinkt. Für den Fall $\zeta_{f_{IF}}$ <0,13 verringert sich der Wert $10\log_{10}(E_b/N_0)$ mit zunehmender Zwischenfrequenz $f_{IF}$ und strebt für $f_{IF}\rightarrow\infty$ gegen den Wert $\approx$11,9 dB der theoretische Schranke, siehe $\zeta_{f_{IF}}$=0,1. Ist jedoch $\zeta_{f_{IF}}$ >0, 13, so sinkt zwar das für das Erreichen des Bitfehlerverhältnisses $10^{-2}$ benötigte Signal-Stör-Verhältnis $10\log_{10}(E_b/N_0)$ mit wachsender Zwischenfrequenz $f_{IF}$; jedoch wird der Wert $\approx$11,9 dB der unteren Schranke nicht erreicht. Der Wert $\approx$11,9 dB wird umso stärker verfehlt, je größer der Skalierungsfaktor $\zeta_{f_{IF}}$ $\zeta_{f_{IF}}$ >0, 13, ist. Für eine gegebene Zwischenfrequenz $f_{IF}$ wächst das für das Erreichen des Bitfehlerverhältnisses $10^{-2}$ benötigte Signal-Stör-Verhältnis $10\log_{10}(E_b/N_0)$ mit zunehmendem Skalierungsfaktor $\zeta_{f_{IF}}$.

Im Folgenden wird noch der Einfluss der endlichen Geschwindigkeit der Zeitmessung auf die Übertragungsqualität betrachtet. Die Wahl des Skalierungsfaktors $\zeta_{f_{IF}}$ ist ein Parameter. Die unendlich schnelle Messung der Zeitpunkte für die Schwellwertdurchgänge ist nicht realisierbar. Denn die Zeitmessung beruht beispielsweise darauf, dass die Anzahl der Taktzyklen einer digitalen Uhr gezählt werden, die zwischen zwei aufeinander folgenden Schwellwertdurchgängen liegen. Die Dauer eines zu zählenden Taktzyklus ist endlich. Typische Taktraten digitaler Schaltungen liegen zwischen wenigen hundert Megahertz und wenigen Gigahertz. Daher sind die typischen Dauern der Taktzyklen zwischen 10ns und 0,1ns. Zum Beispiel kann bei der Zeitmessung eine Zählerschaltung verwendet werden, die mit einer Taktrate 200 MHz betrieben wird. Im Folgenden wird von dieser Taktrate ausgegangen. Entsprechend ist die Dauer eines Taktzyklus gleich 5 ns.

Aufgrund der endlichen Taktrate sinkt jedoch die Zahl der Taktzyklen, die zwischen zwei aufeinander folgenden Schwellwertdurchgängen liegen, mit zunehmender Zwischenfrequenz $f_{IF}$. Dies führt zu einem zunehmenden Quantisierungsrauschen, das die Übertragungsqualität beeinträchtigt. Beide Effekte zusammengenommen ergeben das folgende Verhalten. Für einen sehr niedrigen Wert von $f_{IF}$ wird ein hoher Wert des Signal-Stör-Verhältnisses $10\log_{10}(E_b/N_0)$ zum Erreichen eines bestimmten Fehlerverhältnisses benötigt. Wächst $f_{IF}$, so verringert sich der Wert des Signal-

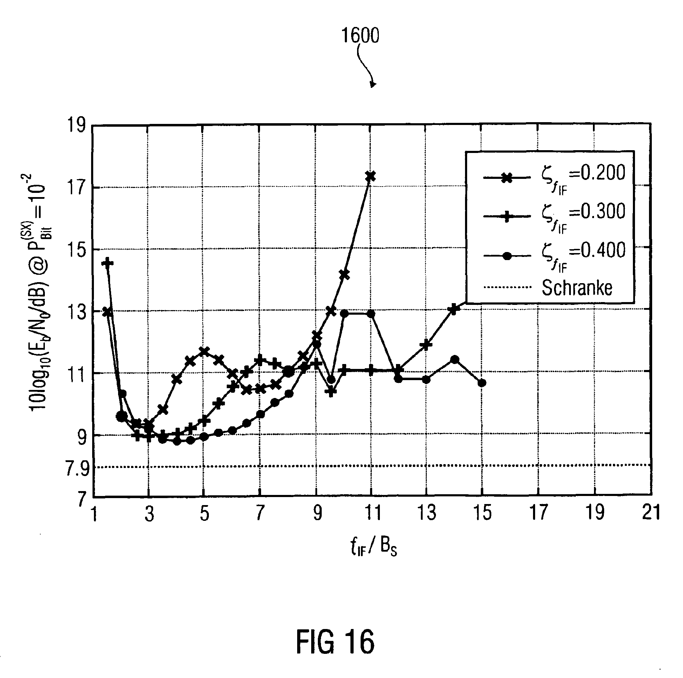

Stör-Verhältnisses $10\log_{10}(E_b/N_0)$ zum Erreichen eines bestimmten Fehlerverhältnisses zunächst bis auf einen minimalen Wert. Die weitere Erhöhung von $f_{IF}$ führt zum verstärkten Auftreten des Quantisierungsrauschens und damit zu einem Zunehmen des Signal-Stör-Verhältnisses $10\log_{10}(E_b/N_0)$ zum Erreichen eines bestimmten Fehlerverhältnisses. Dieses Verhalten ist in Fig. 16 als Beispiel 1600 für den Fall der 16-QAM veranschaulicht.

Fig. 16 zeigt das im Falle von 16-QAM und der Schwellwertdurchgangsdetektion für das Erreichen des Bitfehlerverhältnisses $10^{-2}$ benötigte Signal-Stör-Verhältnis $10\log_{10}(E_b/N_0)$ in dB in Abhängigkeit von der Zwischenfrequenz $f_{IF}$ für $\zeta_{f_{IF}}$ =0,2, $\zeta_{f_{IF}}$ =0,3 und $\zeta_{f_{IF}}$ =0,4. Das Quantisierungsrauschen bestimmt die erzielbare Übertragungsqualität ab Zwischenfrequenz $f_{IF}$ von etwa 3 MHz. Aufgrund der Färbung des Quantisierungsrauschens ist die mit wachsender Zwischenfrequenz $f_{IF}$ erwartete Zunahme des für das Erreichen des Bitfehlerverhältnisses $10^{-2}$ benötigten Signal-Stör-Verhältnisses $10\log_{10}(E_b/N_0)$ nicht monoton. Die Färbung des Quantisierungsrauschens wurde für die Nulldurchgangsdetektion in "Scholand, T.: Entwurf und Realisierung von multistandardfähigen Nulldurchgangsempfängerstrukturen für die drahtlose Kommunikationstechnik, Fachgebiet Kommunikationstechnik, Fakultät Ingenieurwissenschaften der Universität Duisburg-Essen, Dissertation. Aachen: Shaker Verlag, 2007. ISBN : 978-3-8322-5815-3." bereits ausführlich behandelt und wird an dieser Stelle nicht weiter betrachtet. Man erkennt, dass die Wahl von $\zeta_{f_{IF}}$ gleich 0,2 und von $f_{IF}$ gleich rund 3 MHz zum geringsten Signal-Stör-Verhältnis $10\log_{10}(E_b/N_0)$ von ungefähr gleich 8,8 dB zum Erreichen des Bitfehlerverhältnisses $10^{-2}$ führt. Die eingeschränkte Genauigkeit der Zeitmessung führt im betrachteten Fall zu einer Degradation des Signal-Stör-Verhältnisses von knapp 1 dB. Es ist bemerkenswert, dass im Falle einer endlich genauen Zeitmessung die mäßige Erhöhung des Skalierungsfaktors $\zeta_{f_{IF}}$ über die Grenze von 0,26 hinaus zunächst zu einer Verbesserung des Systemverhaltens führt. Dies liegt darin begründet, dass ein geringer Wert von $\zeta_{f_{IF}}$ zur Folge hat, dass zeitlich direkt aufeinander folgende Schwellwertdurchgänge rascher aufeinander folgen, als im Falle eines größeren Skalierungsfaktors $\zeta_{f_{IF}}$. Bei einer festen Taktrate führt dieses aber zu dem Dilemma, dass die Zeitpunkte der direkt aufeinander folgenden Schwellwertdurchgänge nur unzureichend voneinander unterschieden werden können. Eine moderate Vergrößerung des Skalierungsfaktors $\zeta_{f_{IF}}$ behebt diesen Mangel zunächst.

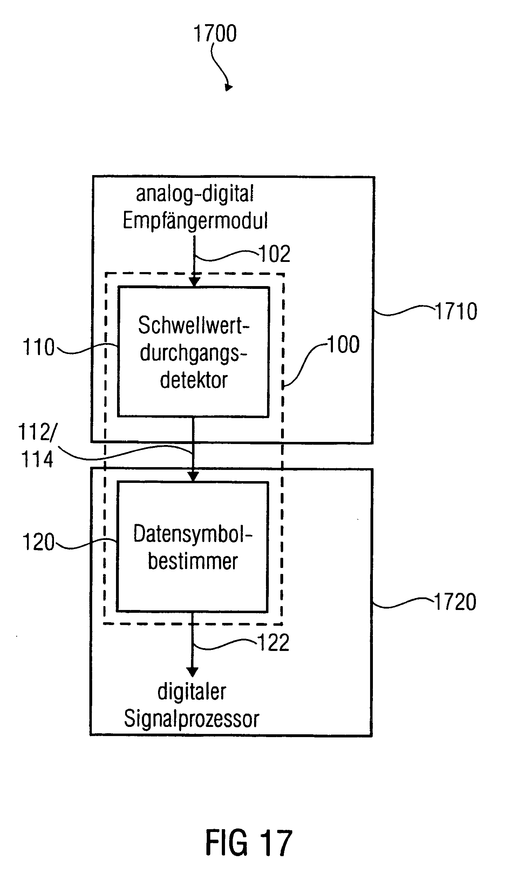

Fig. 17 zeigt ein Blockschaltbild eines Empfängers 1700 mit einer Vorrichtung 100 zum Bestimmen eines Datensymbols entsprechend einem Ausführungsbeispiel gemäß der Erfindung. Der Empfänger 1700 umfasst ein Analog-Digital-Empängermodul 1710, das mit einem digitalen Signalprozessor 1720 verbunden ist. Der Schwellwertdurchgangsdetektor 110 der Vorrichtung 100 zum Bestimmen eines Datensymbols ist dabei Teil des Analog-Digital-Empfängermoduls 1710 und der Datensymbolbestimmer 120 ist Teil des digitalen Signalprozessors 1720.

Einige Ausführungsbeispiele gemäß der Erfindung beziehen sich auf eine Hardware-Realisierung des beschriebenen Konzepts.

Beispielsweise können dazu die bisher bekannten Ergebnisse zur Nulldurchgangsdetektion (ZXD) aus "Scholand, T.: Entwurf und Realisierung von multistandardfähigen Nulldurchgangsempfängerstrukturen für die drahtlose Kommunikationstechnik, Fachgebiet Kommunikationstechnik, Fakultät Ingenieurwissenschaften der Universität Duisburg-Essen, Dissertation. Aachen: Shaker Verlag, 2007. ISBN : 978-3-8322-5815-3.", entsprechend dem beschriebenen Konzept, zur Schwellwertdurchgangsdetektion (SXD) erweitert werden, um den aufwandgünstigen Einsatz der irregulären Abtastung in Empfängern zum Beispiel für höherstufige QAM zu ermöglichen.

Im Folgenden wird eine Realisierung eines multistandardfähigen Demonstrators für Empfänger mit Schwellwertdurchgangsdetektion beschrieben. Dieser Demonstrator ist eine realisierte Erweiterung des in "Scholand, T.: Entwurf und Realisierung von multistandardfähigen Nulldurchgangsempfängerstrukturen für die drahtlose Kommunikationstechnik, Fachgebiet Kommunikationstechnik, Fakultät Ingenieurwissenschaften der Universität Duisburg-Essen, Dissertation. Aachen: Shaker Verlag, 2007. ISBN : 978-3-8322-5815-3." vorgestellten Demonstrationssystems. Der hier gezeigte Demonstrator erbringt den praktischen Beweis der Machbarkeit der beschriebenen Schwellwertdurchgangsdetektion. Er wird im Folgenden in Anlehnung an "Scholand, T.: Entwurf und Realisierung von multistandardfähigen Nulldurchgangsempfängerstrukturen für die drahtlose Kommunikationstechnik, Fachgebiet Kommunikationstechnik, Fakultät Ingenieurwissenschaften der Universität Duisburg-Essen, Dissertation. Aachen: Shaker Verlag, 2007. ISBN : 978-3-8322-5815-3." als HAWK-SXD bezeichnet. Die Abkürzung HAWK bedeutet hochadaptives drahtloses Werkzeug (engl. Highly Adaptive Wireless Kit) (siehe "Scholand, T.: Entwurf und Realisierung von multistandardfähigen Nulldurchgangsempfängerstrukturen für die drahtlose Kommunikationstechnik, Fachgebiet Kommunikationstechnik, Fakultät Ingenieurwissenschaften der Universität Duisburg-Essen, Dissertation. Aachen: Shaker Verlag, 2007. ISBN: 978-3-8322-5815-3.")

Der HAWK-SXD-Demonstrator stellt zum praktischen Nachweis der Machbarkeit der Schwellwertdurchgangsdetektion eine multimediale Anwendung und verschiedene multimediale Dienste für den Echtzeitbetrieb bereit. Der Begriff Echtzeitbetrieb bezeichnet diejenige Betriebsart des HAWK-SXD-Demonstrators, bei welcher die anfallenden Daten innerhalb einer vorgegebenen Zeitspanne verarbeitet werden (siehe "Deutsches Institut für Normung (DIN): Informationsverarbeitung; Begriffe. DIN-Norm 44300, 1982").

Der HAWK-SXD-Demonstrator umfasst ein TMS320C6416 DSK, ein digitales Schnittstellenmodul, ein Analog/digital-Sendermodul, ein Analog/digital-Empfängermodul, eine SD-Kartenschnittselle mit SPI/UART und EEPROM, einnm Bildschirm und eine numerische Tastatur, eine USB (engl. universal serial bus)-Platine, ein Atmel-EVM (Entwicklungsmodul) und eine Antenne.

Das TMS320C6416 DSK (engl. DSP Starter Kit, digitaler Signalprozessor-Starterset) der Firma Spectrum Digital trägt das Herzstück der digitalen Signalverarbeitung, nämlich den TMS320C6416 DSP (digitaler Signalprozessor) der Firma Texas Instruments. Darüber hinaus verfügt das TMS320C6416 DSK über Anschlüsse, die mit Erweiterungskarten (engl. Daughtercards) verbunden werden können.

Das digitale Schnittstellenmodul ist eine Erweiterungskarte zum Anschluss an das TMS320C6416 DSK. Das digitale Schnittstellenmodul erledigt die digitale Vorverarbeitung der Sende- und der Empfangssignale. Dazu ist es mit der Schnittstelle zum externen Speicher des TMS320C6416 DSK verbunden. Außerdem stellt das digitale Schnittstellenmodul Anschlüsse zur Quelle und Sinke, zum TMS320C6416 DSK, zum Analog/digital-Empfängermodul Formel, zur SD-Kartenschnittselle mit SPI/UART und EEPROM, zum Bildschirm und zur numerischen Tastatur sowie zur USB-Platine bereit.

Das Analog/digital-Sendermodul Formel und das Analog/digital-Empfängermodul Formel sind auf einer gemeinsamen Platine realisiert. Für die Realisierung der Schwellwertdurchgangsdetektion wird das Analog/digital-Sendermodul nicht benötigt und ist daher eine optionale Erweiterung. Durch eine solche Erweiterung kann beispielsweise ein Sende-/Empfangsgerät (tranceiver) realisiert werden.

Die SD-Kartenschnittstelle mit SPI/UART und EEPROM dient zum Beispiel zum Einspeisen von auf einer SD-Karte gespeicherten Quellensignalen in den HAWK-SXD-Demonstrator. Bildschirm und numerische Tastatur erlauben die Veränderung und Kontrolle der Betriebsmodi und der Betriebsparameter. Der HAWK-SXD-Demonstrator unterstützt beispielsweise zwei Betriebsmodi, den Terminal- und den USB-Betriebsmode.

Im Terminalbetriebsmode werden die alphanumerische Tastatur und LCD bzw. berührungsempfindlicher Bildschirm als MMS (Mensch-Maschine-Schnittstelle) verwendet. Für diesen Betriebsmode ist zum Beispiel als Anwendung die Übermittlung der Textnachrichten (engl. Chat) vorgesehen. Der Terminalbetriebsmode bietet eine kompakte Zusammensetzung des HAWK-SXD-Demonstrators, bei welcher auf den PC und die USB-Schnittstelle verzichtet werden kann.

Im USB-Betriebsmode agiert HAWK-SXD-Demonstrator als ein an USB-Schnittstelle eines PC angeschlossenes Gerät das mittels einer anwendungsspezifischen Software alle vorhin beschriebene Anwendungen unterstützt.

Die Betriebsparameter sind die gewählte Modulationsart, die aktuelle Übertragungsqualität in Form des kurzzeitig gemittelten Blockfehlerverhältnisses und des KONZEPT UND AUFBAU DES HAWK-SXD-DEMONSTRATORS Durchsatzes in kbit/s. Die USB-Platine verbindet den HAWK-SXD-Demonstrator mit einem Personal-Computer (PC), der als Quelle und Sinke dient.

Das Atmel-EVM (engl Evaluation Module, Entwicklungsmodul) realisiert die Hochfrequenzkomponente des HAWK-SXD-Demonstrators und ist mit dem Analog/digital-Sendermodul und dem Analog/digital-Empfängermodul verbunden. Die Antenne ist an das Atmel-EVM angeschlossen.

Mit dem HAWK-SXD-Demonstrator können beispielsweise folgende Dienste bereitgestellt werden: Live video, Streaming Media (Datenstrommedien), Datenübertragung, Textnachrichten (engl. chat) und World Wide Web (WWW, Internet).

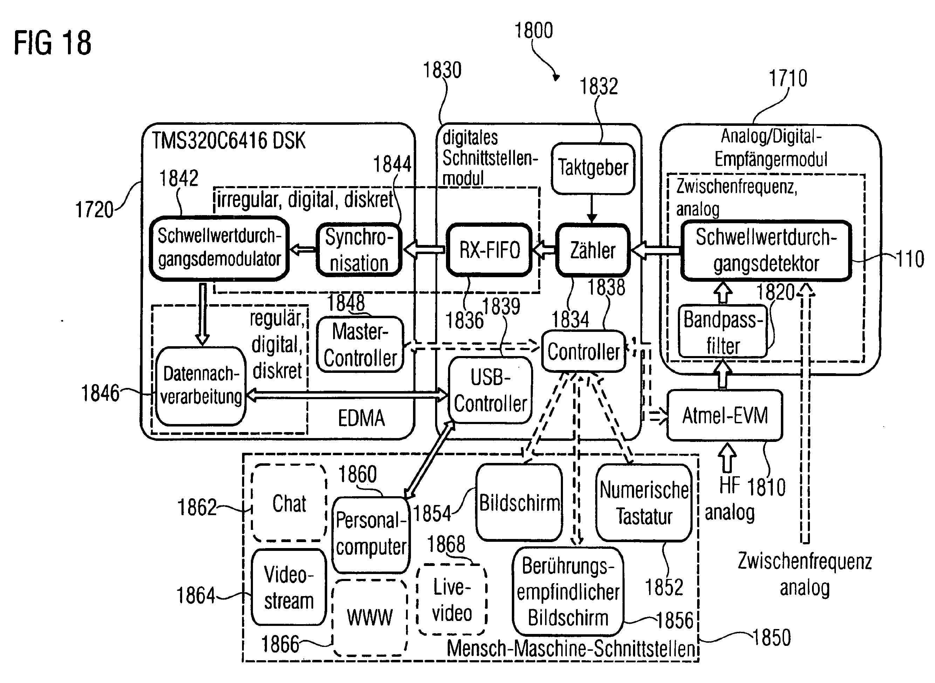

Fig. 18 zeigt ein Blockdiagram des HAWK-SXD-Empfängers 1800 entsprechend einem Ausführungsbeispiel gemäß der Erfindung. Der HAWK-SXD-Empfänger 1800 kann in mehrere funktionelle Einheiten wie eine Mensch-Maschine-Schnittstelle (MMS) 1850, ein digitales Basisband, ein analoges Basisband und einen Mischer unterteilt werden. Diese funktionellen Einheiten werden, wie in Fig. 18 dargestellt, durch die Module TMS320C6416 DSK 1720, das Schnittstellenmodul 1830, das Empfängermodul 1710, die SD-Kartenschnittstelle mit SPI/UART und EEPROM, den Bildschirm 1854, die numerische Tastatur 1852, die USB-Platine 1839, das EVM 1810 und die Antenne des HAWK-SXD-Demonstrators realisiert.

In anderen Worten, der Empfänger 1800 umfasst ein Analog-Digital-Empfängermodul 1710, ein digitales Schnittstellenmodul 1830, einen digitalen Signalprozessor 1720, eine Mensch-Maschinen-Schnittstelle 1850 und einen Atmel-EMV 1810 (Entwicklungsmodul). Das Analog-Digital-Empfängermodul 1710 weist einen Bandpassfilter 1820 und einen Schwellwertdurchgangsdetektor 110 auf und das digitale Schnittstellenmodul 1830 weist einen Taktgeber 1832, einen Zähler 1834, ein RX-FIFO 1836 (Receiver-First-In-First-Out Memory, Empfänger-Silospeicher), einen Controller 1838 und einen USB-Controller 1839 (Universal Serial Bus, universeller serieller Bus) auf. Der digitale Signalprozessor 1720 umfasst einen Schwellwertdurchgangsdemodulator 1842, einen Synchronisator 1844, eine Datennachverarbeitungseinrichtung 1846 und einen Master-Controller 1848. Die Mensch-Maschine-Schnittstelle 1850 weist eine numerische Tastatur 1852, einen Personalcomputer 1860, einen Bildschirm 1854 und/oder einen berührungsempfindlichen Bildschirm 1856 auf. Mit dem Personalcomputer 1860 sind Anwendungen wie beispielsweise Live-Video 1868, Video Stream 1864 (Videostrom), Internet (WWW) 1866 und/oder Chat 1862 (Unterhaltung) möglich. Das Atmel-EMV 1810 ist mit dem Bandpassfilter 1820 und optional mit dem Controller 1838 verbunden, das Bandpassfilter 1820 ist mit dem Schwellwertdurchgangsdetektor 110 verbunden, der Schwellwertdurchgangsdetektor 110 und der Taktgeber 1833 sind mit dem Zähler 1834 verbunden, der Zähler 1834 ist mit dem RX-FIFO 1836 verbunden, das RX-FIFO 1836 ist mit dem Synchronisator 1844 verbunden, der Synchronisator 1844 ist mit dem Schwellwertdurchgangsdemodulator 1842 ver-

EP 2 273 744 B1

bunden, der Schwellwertdurchgangsdemodulator 1842 ist mit der Datennachverarbeitungsvorrichtung 1846 verbunden, die Datennachverarbeitungsvorrichtung 1846 ist mit dem USB-Controller 1839 verbunden, der USB-Controller 1839 ist mit dem Personalcomputer 1860 verbunden, der Master-Controller 1848, der Bildschirm 1854, der berührungsempfindliche Bildschirm 1856 und die numerische Tastatur 1852 können mit dem Controller 1838 verbunden sein.

Die vom Sender abgestrahlten elektromagnetischen Wellen werden von der Antenne des Empfängers 1800 in ein elektrisches, hochfrequentes Differenz-Signal umgewandelt. Die Mittenfrequenz des hochfrequenten Differenz-Signals ist $f_c$ und liegt beispielsweise im ISM-Band um 2,45 GHz. Das Atmel-EVM 1820, in Fig. 18, setzt das hochfrequente Differenz-Signal in ein Zwischenfrequenzsignal mit der Mittenfrequenz $f_{IF}$ größer Null um.

Das entstandene Zwischenfrequenzsignal wird dem Analog/digital-Empfängermodul Formel 1710 zugeführt und dort einem Bandpassfilter 1820 mit der Mittenfrequenz $f_{IF}$ zugeführt. Dieses Bandpassfilter 1820 ist zum Beispiel ein Butterworth-Filter dritter Ordnung. Zur besseren Unterdrückung von Nachbarkanälen wäre auch die Verwendung eines Polyphasenfilters zweckmäßig. Dies wurde zum Beispiel in "Scholand, T.: Entwurf und Realisierung von multistandardfähigen Nulldurchgangsempfängerstrukturen für die drahtlose Kommunikationstechnik, Fachgebiet Kommunikationstechnik, Fakultät Ingenieurwissenschaften der Universität Duisburg-Essen, Dissertation. Aachen: Shaker Verlag, 2007. ISBN : 978-3-8322-5815-3." angesprochen.

Das resultierende, gefilterte Zwischenfrequenzsignal wird der Schwellwertdurchgangsdetektion unterworfen. Die in diesem Ausführungsbeispiel zur Schwellwertdurchgangsdetektion benötigten Blöcke sind in Fig. 18 hervorgehoben. Bei der Schwellwertdurchgangsdetektion wird zuerst die Amplitude des gefilterten Zwischenfrequenzsignals mit den Schwellwerten -a und +a verglichen. Dieser Vergleich wird zum Beispiel mit Hilfe zweier Komparatoren (siehe "Analog Devices: Ultrafast, 4 ns Single-Supply Comparators AD8611/AD8612. Datenblatt, Revision A, August 2006.") durchgeführt. Die am Ausgang der beiden Komparatoren vorliegenden Signale werden anschließend an das digitale Schnittstellenmodul 1830 weitergereicht.

Die Zeiten der Schwellwertdurchgänge werden zum Beispiel im komplexen programmierbaren Logikbaustein (engl. complex programmable logic device, CPLD) (siehe "Infineon Technologies AG: Halbleiter: technische Erläuterungen, Technologien und Kenndaten, Dritte Auflage, Erlangen: Publicis Corporate Publishing, 2004. ISBN: 3-89578-205-X") der Firma Lattice (siehe "Lattice Semiconductor Corporation: ispMACH 4000 V/B/C/Z Family 3.3V/2.5V/1.8V In-System Programmahle Super FAST High Density PLDs. Datenblatt, Februar 2006") detektiert. Dieser CPLD-Baustein wird im Weiteren kurz RX-CPLD genannt. Zur Bereitstellung von Referenzzeitpunkten wird die auf dem digitalen Schnittstellenmodul realisierte Zeitgeberschaltung 1832 verwendet. Diese enthält eine PLL (engl. phase locked loop, Phasenregelschleife)-Schaltung (siehe "Cypress: CY22393, CY22394, CY22395, Three-PLL Serial-Programmable Flash-Programmahle Clock Generator. Datenblatt, überarbeitete Version, Juni 2004") und einen Quarzoszillator. Die Zeitgeberschaltung 1832 erzeugt ein Rechtecksignal mit einer Periode von 0,5 ms. Das Ausgangssignal der Zeitgeberschaltung wird als Taktsignal verwendet. Mit diesem Taktsignal wird der in der RX-CPLD enthaltene Zähler 1834 inkrementiert, bis sich ein neuer Schwellwertdurchgang ereignet. Zum Zeitpunkt eines Schwellwertdurchgangs wird der erreichte Zählerstand festgehalten und im Empfangs (RX)-FIFO-Speicher 1836 (siehe "Texas Instruments: SN74V3640, SN74V3650, SN74V3660, SN74V3670, SN74V3680, SN74V3690; 1024 x 36, 2048 x 36, 4096 x 36, 8192 x 36, 16384 x 36, 32768 x 36; 3.3-V CMOS First-In, First-Out Memories. Datenblatt, überarbeitete Version, März 2003.") des digitalen Schnittstellenmoduls abgelegt. Gleichzeitig wird der Zählerstand auf Null zurückgesetzt und der Zählvorgang erneut gestartet.

Die im RX-FIFO-Speicher 1836 abgelegten Zählerstände

$$\left[...,\Delta k'^{(-,+)}_{(k,k)},\Delta k'^{(+,+)}_{k,k+1},\Delta k'^{(+,-)}_{k+1,k+1},\Delta k'^{(-,-)}_{k+1,k+2},...\right],\quad k\in\mathbb{N} \tag{4.3}$$

repräsentieren die Anzahl von 0,5 ms langen Taktperioden, die zwischen zwei aufeinanderfolgenden Schwellwertdurchgängen vergehen. Es gilt

26

$$\Delta k_{(k,k)}^{\prime(-,+)} = \left| \frac{t_k^+ - t_k^-}{T_{\text{clock}}} \right|$$

$$\Delta k_{(k,k+1)}^{\prime(+,+)} = \left| \frac{t_{k+1}^+ - t_{k+1}^+}{T_{\text{clock}}} \right|$$

$$\Delta k_{(k+1,k+1)}^{\prime(+,-)} = \left| \frac{t_{k+1}^- - t_{k+1}^+}{T_{\text{clock}}} \right|$$

$$\Delta k_{(k+1,k+2)}^{\prime(-,-)} = \left| \frac{t_{k+2}^- - t_{k+1}^-}{T_{\text{clock}}} \right| \qquad (4.4)$$

In Formel (4.4) bezeichnet [·] den ganzzahligen Anteil von , der kleiner oder gleich ist.

Die im RX-FIFO-Speicher 1836 abgelegten Zählerstände $\Delta k_{(\cdot,\cdot)}^{\prime(\cdot,\cdot)}$ nach Formel (4.4) werden durch EDMA-Transfers (enhanced direct memory access, erweiterter Speicherdirektzugriff) in den internen Speicher des TMS320C6416 DSP 1720 übertragen. Die Signalverarbeitung entsprechend Formel (3.47) findet im TMS320C6416 DSP 1720 statt. Dazu können beispielsweise Programme in der Programmiersprache C oder einer anderen Programmiersprache verwendet werden, die auf dem TMS320C6416 DSP 1720 ablaufen.

Um eine kohärente Datendetektion im TMS320C6416 DSP durchführen zu können, kann zunächst eine Synchronisation erfolgen. Diese kann auf der Grundlage einer bekannten Präambel, welche im Sendedatenstrom enthalten ist, erreicht werden (siehe dazu auch "Scholand, T.: Entwurf und Realisierung von multistandardfähigen Nulldurchgangsempfängerstrukturen für die drahtlose Kommunikationstechnik, Fachgebiet Kommunikationstechnik, Fakultät Ingenieurwissenschaften der Universität Duisburg-Essen, Dissertation. Aachen: Shaker Verlag, 2007. ISBN : 978-3-8322-5815-3." sowie Fig. 18). Wesentliche Implementierungsaspekte der DSP-basierenden Realisierung der Synchronisierung findet man zum Beispiel in "Burnic, A. ; Faber, T. ; Scholand, T. ; Jung, P.: On irnplementation aspects of fast iterative tap amplitude and delay estimation for UMTSIWCDMA. IET Communications, Bd. 1, April 2007.".

Die für die Schwellwertdurchgangsdetektion notwendige Schätzung der Phase eines zu detektierenden Datensymbols entsprechend Formel (3.46) kann durch Integration entsprechender Zählerstände nach Formel (4.4) erreicht werden. Diese Integration kann als kumulative Summe im TMS320C6416 DSP 1720 realisiert werden und entspricht der iterativen Vorschrift

$$k_{(0,1)}^{\prime(-,-)} = 0$$

$$k_{(k,k)}^{\prime(-,+)} = k_{(k-1,k)}^{\prime(-,-)} + \Delta k_{(k,k)}^{\prime(-,+)}$$

$$k_{(k,k+1)}^{\prime(+,+)} = k_{(k,k)}^{\prime(-,+)} + \Delta k_{(k,k+1)}^{\prime(+,+)} \qquad k \in \mathbb{N}.$$

$$k_{(k+1,k+1)}^{\prime(+,-)} = k_{(k,k+1)}^{\prime(+,+)} + \Delta k_{(k+1,k+1)}^{\prime(+,-)}$$

$$k_{(k+1,k+2)}^{\prime(-,-)} = k_{(k+1,k+1)}^{\prime(+,-)} + \Delta k_{(k+1,k+2)}^{\prime(-,-)} \qquad (4.5)$$

Mit Formel (4.4) und mit Formel (4.5) kann die kohärente Schwellwertdurchgangsdetektion entsprechend Formel (3.47) im HAWK-SXD-Demonstrator erreicht werden.

Nach der kohärenten Schwellwertdurchgangsdetektion wird zum Beispiel die Decodierung der Kanalcodierung durchgeführt. Zunächst erfolgt beispielsweise die Fehlerkorrektur und im Anschluss die Fehlererkennung. Zum Beispiel kann im HAWK-SXD-Demonstrator ein ARQ-Verfahren (automatic repeat request, automatische Wiederholanfrage) auf der Grundlage der Fehlerkennung realisiert werden. Derjenige Bitstrom, welcher am Ausgang der Decodierung vorliegt, wird über die USB-Schnittstelle an die auf einem PC 1860 realisierte Anwendung weitergereicht.

Die gesamte Zeitablaufsteuerung (engl. Scheduling) des HAWK-SXD-Demonstrators kann von einem Master-Controller 1848 erledigt werden. Die Zeitablaufsteuerung im HAWK-SXD-Demonstrator ist zum Beispiel anhand von gestrichelten grauen Linien veranschaulicht. Der Zustandsautomat des Master-Controllers 1848 kann im TMS320C6416 DSP 1720 in Software realisiert werden. Der Master-Controller 1848 sorgt für die Zuteilung der Ressourcen im HAWK-SXD-Demonstrator, um den Echtzeitbetrieb zu ermöglichen.

Mit dem beschriebenen Satz an Hardware-Modulen sind verschiedene Konfigurationen des HAWK-SXD-Demonstrators und somit verschiedene Betriebsarten möglich. Neben dem gerade beschriebenen Normalbetrieb, d.h. der Demonstration der Funkübertragung, kann eine Reihe von digitalen Schleifentests (engl. Loopback test) sowie Tests der analogen Komponenten durchgeführt werden. Die Testbetriebsarten sind zu Verifizierungszwecken gedacht.

Module, die für die jeweilige Betriebsart nicht benötigt werden, können aus dem Hardware-Aufbau des HAWK-SXD-Demonstrators entfernt werden, ohne die Funktionalität zu beeinträchtigen.

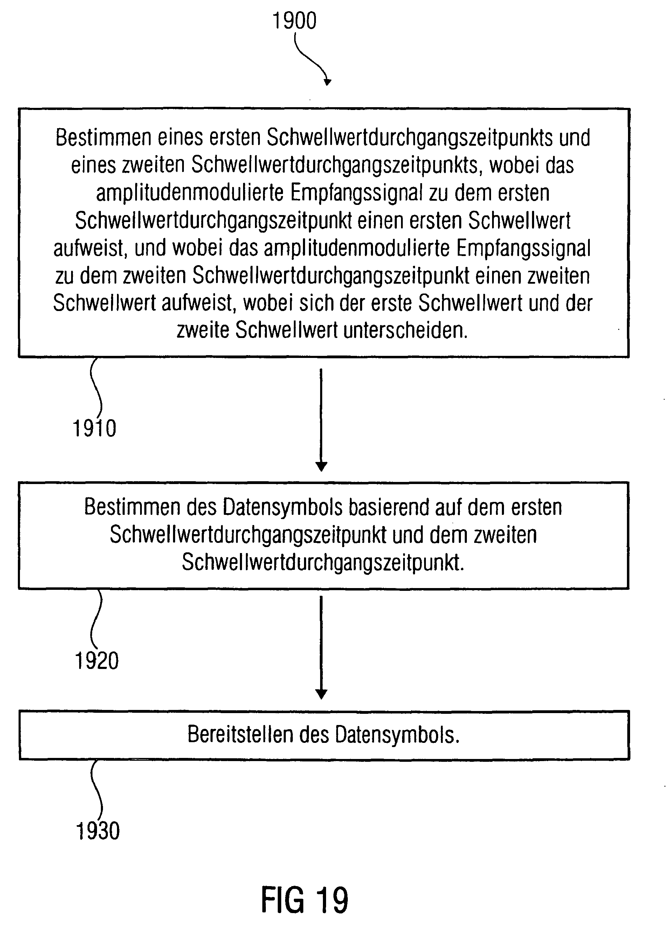

Fig. 19 zeigt ein Flussdiagramm eines Verfahrens 1900 zum Bestimmen eines Datensymbols in einem amplitudenmodulierten Empfangssignal entsprechend einem Ausführungsbeispiel gemäß der Erfindung. Das Verfahren 1900 umfasst ein Bestimmen 1910 eines ersten Schwellwertdurchgangszeitpunkts und eines zweiten Schwellwertdurchgangszeitpunkts, ein Bestimmen 1920 des Datensymbols basierend auf dem ersten Schwellwertdurchgangszeitpunkt und dem zweiten Schwellwertdurchgangszeitpunkt und ein Bereitstellen 1930 des Datensymbols. Dabei weist das amplitudenmodulierte Empfangssignal zu dem ersten Schwellwertdurchgangszeitpunkt einen ersten Schwellwert und zu dem zweiten Schwellwertdurchgangszeitpunkt einen zweiten Schwellwert auf. Der erste Schwellwert und der zweite Schwellwert unterscheiden sich voneinander.

Allgemein wird darauf hingewiesen, dass abhängig von den Gegebenheiten, das erfindungsgemäße Schema auch in Software implementiert sein kann. Die Implementation kann auf einem digitalen Speichermedium, insbesondere einer Diskette oder einer CD mit elektronisch auslesbaren Steuersignalen erfolgen, die so mit einem programmierbaren Computersystem zusammenwirken können, dass das entsprechende Verfahren ausgeführt wird. Allgemein besteht die Erfindung somit auch in einem Computerprogrammprodukt mit auf einem maschinenlesbaren Träger gespeicherten Programmcode zur Durchführung des erfindungsgemäßen Verfahrens, wenn das Computerprogrammprodukt auf einem Rechner abläuft. In anderen Worten ausgedrückt, kann die Erfindung somit als ein Computerprogramm mit einem Programmcode zur Durchführung des Verfahrens realisiert werden, wenn das Computerprogrammprodukt auf einem Computer abläuft.

**Patentansprüche**

1. Vorrichtung (100; 300) zum Bestimmen eines Datensymbols (122) in einem amplitudenmodulierten Empfangssignal (102), mit folgenden Merkmalen:

   einem Schwellwertdurchgangsdetektor (110), der ausgelegt ist, um einen ersten Schwellwertdurchgangszeitpunkt (112) und einen zweiten Schwellwertdurchgangszeitpunkt (114) zu bestimmen, wobei das amplitudenmodulierte Empfangssignal (102) zu dem ersten Schwellwertdurchgangszeitpunkt (112) einen ersten Schwellwert aufweist, und wobei das amplitudenmodulierte Empfangssignal (102) zu dem zweiten Schwellwertdurchgangszeitpunkt (114) einen zweiten Schwellwert aufweist, wobei sich der erste Schwellwert und der zweite Schwellwert unterscheiden,
   wobei sowohl der erste Schwellwert als auch der zweite Schwellwert mindestens einmal in einem Symbolintervall des Datensymbols erreicht werden; und
   einen Datensymbolbestimmer (120), der ausgelegt ist, um basierend auf dem ersten Schwellwertdurchgangszeitpunkt (112) und dem zweiten Schwellwertdurchgangszeitpunkt (114) sowohl Amplitude als auch Phase des Empfangssignals zu bestimmen, um das Datensymbol (122) zu bestimmen und bereitzustellen.

2. Vorrichtung gemäß Anspruch 1, wobei der Datensymbolbestimmer (120) ausgelegt ist, um das Datensymbol (122) basierend auf einer Multiplikation einer Betragsvariable und einer Phasenvariable zu bestimmen.

3. Vorrichtung gemäß Anspruch 2, wobei die Betragsvariable von einer Differenz des ersten Schwellwertdurchgangszeitpunkts (112) und des zweiten Schwellwertdurchgangszeitpunkts (114) abhängt und wobei die Phasenvariable von einer Summe des ersten Schwellwertdurchgangszeitpunkts (112) und des zweiten Schwellwertdurchgangszeitpunkts (114) abhängt.

4. Vorrichtung gemäß einem der Ansprüche 1 bis 3, wobei der erste Schwellwert dem negativen zweiten Schwellwert entspricht.

5. Vorrichtung gemäß Anspruch 2 oder 3, wobei der erste Schwellwert dem negativen zweiten Schwellwert entspricht, und wobei die Betragsvariable den ersten Schwellwert oder den zweiten Schwellwert als Koeffizienten aufweist.

6. Vorrichtung gemäß einem der Ansprüche 1 bis 5, die ein Empfangsfilter (310) aufweist, wobei der Datensymbolbestimmer (120) ausgelegt ist, um das Datensymbol (122) basierend auf einer Autokorrelation einer Impulsantwort des Empfangsfilters (310) zu bestimmen.

7. Vorrichtung gemäß Anspruch 2, 3 oder 5, die ein Empfangsfilter (310) aufweist, wobei der Datensymbolbestimmer (120) ausgelegt ist, um das Datensymbol (122) basierend auf einer Autokorrelation einer Impulsantwort des Empfangsfilters (310) zu bestimmen, wobei die Phasenvariable auf der Autokorrelation basiert.

8. Vorrichtung gemäß Anspruch 7, wobei der Datensymbolbestimmer (120) ausgelegt ist, um das Datensymbol basierend auf

$$\hat{\underline{d}}_{k_d} \approx \sqrt{\frac{T_s}{2\mathcal{E}_d}} \frac{a_0}{2\pi f_{IF} \Delta t_{k_d}} \cdot \exp\left\{-j \frac{2\pi f_{IF} \overline{t}_{k_d}}{p\left(t_k^+ - [k_d-1]T_s\right)}\right\}, \quad k_d = 1,...,N_d.$$

mit

$$\Delta t_{k_d} = \frac{t_{k_d}^+ - t_{k_d}^-}{2}.$$

und mit

$$\overline{t}_{k_d} = \frac{t_{k_d}^+ + t_{k_d}^-}{2}.$$

zu bestimmen, wobei $\hat{d}_{k_d}$ das zu bestimmende Datensymbol (122) ist, $k_d$ eine Datensymbolnummer, $T_s$ eine Symboldauer ist, $\varepsilon_d$ eine mittlere Datensymbolenergie ist, $a_0$ der erste Schwellwert oder der zweite Schwellwert ist, $f_{IF}$ eine Zwischenfrequenz ist, $t_{k_d}^+$ der zweite Schwellwertdurchgangszeitpunkt ist, $t_{k_d}^-$ der erste Schwellwertdurchgangszeitpunkt ist, j die imaginäre Einheit ist und $\rho(t_k^+ - [k_d-1]T_s)$ die Autokorrelation der Impulsantwort des Empfangsfilters in Abhängigkeit von $t_k^+ - [k_d-1]T_s$ ist.

9. Vorrichtung gemäß einem der Ansprüche 1 bis 8, die einen Schwellwertbestimmer (320) aufweist, der ausgelegt ist, um den ersten Schwellwert und den zweiten Schwellwert zu bestimmen, wobei der erste Schwellwert und der zweite Schwellwert auf einem Leistungsparameter und einem Skalierungsfaktor basieren.

10. Vorrichtung gemäß Anspruch 9, wobei der Schwellwertbestimmer (320) ausgelegt ist, um den Skalierungsfaktor abhängig von einer Modulationsart des amplitudenmodulierten Empfangssignals (102) und abhängig von einer Impulsantwort eines Filters zu bestimmen.

**11.** Vorrichtung gemäß Anspruch 10, die einen Empfangsfilter (310) aufweist, wobei das amplitudenmodulierte Empfangssignal (102) von einem Sender gesendet wird, wobei der Sender einen Sendefilter aufweist, wobei der Skalierungsfaktor von einer Impulsantwort des Empfangsfilters (310) abhängt oder von Impulsantwortparametern des Sendefilters abhängt, wobei die Impulsantwortparameter des Sendefilters in dem amplitudenmodulierten Empfangssignal 102 enthalten sind.

**12.** Vorrichtung gemäß Anspruch 11, wobei der Schwellwertbestimmer ausgelegt ist, um den Skalierungsfaktor basierend auf der Ungleichung

$$\zeta_{f_{\mathrm{IF}}} < \rho_{\min}(M)\left(1 - \frac{1}{\gamma_{\mathrm{RRC}}(\alpha)}\right)$$

mit

$$\gamma_{\mathrm{RRC}}(\alpha) = \frac{4\alpha + \pi(1-\alpha)}{\pi \sum_{k=-\infty}^{\infty} (-1)^k\, h_{\mathrm{RRC}}\left(k \cdot T_{\mathrm{symbol}}\right) - 4\alpha - \pi(1-\alpha)}.$$

wobei $\xi_{fIF}$ der Skalierungsfaktor ist, $\rho_{\min}(M)$ eine minimale Norm ist, M eine Anzahl von Stufen einer verwendeten Modulationsart ist, $\gamma_{RRC}(\alpha)$ das Verhältnis des Nutzanteils zur Summe der Störanteile ist, $\alpha$ der Roll-Off-Faktor ist, $h_{RRC}(kT_{symbol})$ die Impulsantwort des Sendefilters oder des Empfangsfilters in Abhängigkeit von $kT_{symbol}$ ist.

**13.** Empfänger (1700) mit folgendem Merkmal:

einer Vorrichtung (100) zum Bestimmen eines Datensymbols (122) in einem amplitudenmodulierten Empfangssignal (102) gemäß einem der Ansprüche 1 bis 12, wobei der Schwellwertdurchgangsdetektor (110) Teil eines Analog-Digital-Empfängermoduls (1710) des Empfängers (1700) ist, und wobei der Datensymbolbestimmer (120) Teil eines digitalen Signalprozesses (1720) des Empfängers (1700) ist.

**14.** Verfahren (1900) zum Bestimmen eines Datensymbols in einem amplitudenmodulierten Empfangssignal, mit folgenden Schritten:

Bestimmen (1910) eines ersten Schwellwertdurchgangszeitpunkts und eines zweiten Schwellwertdurchgangszeitpunkts, wobei das amplitudenmodulierte Empfangssignal zu dem ersten Schwellwertdurchgangszeitpunkt einen ersten Schwellwert aufweist, und wobei das amplitudenmodulierte Empfangssignal zu dem zweiten Schwellwertdurchgangszeitpunkt einen zweiten Schwellwert aufweist, wobei sich der erste Schwellwert und der zweite Schwellwert unterscheiden, wobei sowohl der erste Schwellwert als auch der zweite Schwellwert mindestens einmal in einem Symbolintervall des Datensymbols erreicht werden; Bestimmen (1920) von sowohl Amplitude als auch Phase des Empfangssignals basierend auf dem ersten Schwellwertdurchgangszeitpunkt und dem zweiten Schwellwertdurchgangszeitpunkt, um des Datensymbols zu bestimmen; und Bereitstellen (1930) des Datensymbols.

**15.** Computerprogramm mit einem Programmcode zur Durchführung des Verfahrens gemäß Anspruch 14, wenn das Computerprogramm auf einem Computer oder Mikrocontroller abläuft.

**Claims**

**1.** Apparatus (100; 300) for determining a data symbol (122) in an amplitude-modulated receive signal (102), comprising:

a threshold value passage detector (110) configured to determine a first threshold value passage time (112) and a second threshold value passage time (114), the amplitude-modulated receive signal (102) having a first threshold value at the first threshold value passage time (112), and the amplitude-modulated receive signal (102) having a second threshold value at the second threshold value passage time (114), the first and second threshold values differing from each other,

both the first threshold value and the second threshold value being achieved at least once within a symbol interval of the data symbol; and

a data symbol determiner (120) configured to determine both the amplitude and the phase of the receive signal on the basis of the first threshold value passage time (112) and the second threshold value passage time (114) so as to determine and provide the data symbol (122).

2. Apparatus as claimed in claim 1, wherein the data symbol determiner (120) is configured to determine the data symbol (122) on the basis of multiplying a magnitude variable and a phase variable.

3. Apparatus as claimed in claim 2, wherein the magnitude variable depends on a difference between the first threshold value passage time (112) and the second threshold value passage time (114), and wherein the phase variable depends on a sum of the first threshold value passage time (112) and the second threshold value passage time (114).

4. Apparatus as claimed in any of claims 1 to 3, wherein the first threshold value corresponds to the negative second threshold value.

5. Apparatus as claimed in claims 2 or 3, wherein the first threshold value corresponds to the negative second threshold value and wherein the magnitude variable has the first threshold value or the second threshold value as a coefficient.

6. Apparatus as claimed in any of claims 1 to 5, comprising a receive filter (310), the data symbol determiner (120) being configured to determine the data symbol (122) on the basis of an autocorrelation of a pulse response of the receive filter (310).

7. Apparatus as claimed in claims 2, 3, or 5, comprising a receive filter (310), the data symbol determiner (120) being configured to determine the data symbol (122) on the basis of an autocorrelation of a pulse response of the receive filter (310), the phase variable being based on the autocorrelation.

8. Apparatus as claimed in claim 7, wherein the data symbol determiner (120) is configured to determine the data symbol on the basis of

$$\hat{\underline{d}}_{k_\mathrm{d}} \approx \sqrt{\frac{T_\mathrm{s}}{2\mathcal{E}_\mathrm{d}}} \frac{a_0}{2\pi f_\mathrm{IF} \Delta t_{k_\mathrm{d}}} \cdot \exp\left\{-\mathrm{j}\frac{2\pi f_\mathrm{IF}\bar{t}_{k_\mathrm{d}}}{p\left(t_k^+ - [k_\mathrm{d}-1]T_\mathrm{s}\right)}\right\}, \quad k_\mathrm{d} = 1,...,N_\mathrm{d}.$$

with

$$\Delta t_{k_\mathrm{d}} = \frac{t_{k_\mathrm{d}}^+ - t_{k_\mathrm{d}}^-}{2}.$$

and with

$$\bar{t}_{k_\mathrm{d}} = \frac{t_{k_\mathrm{d}}^+ + t_{k_\mathrm{d}}^-}{2}.$$

wherein $\hat{d}_{k_d}$ is the data symbol (122) to be determined, $k_d$ is a data symbol number, $T_s$ is a symbol duration, $\varepsilon_d$ is an average data symbol energy, $a_0$ is the first threshold value or the second threshold value, $f_{IF}$ is an intermediate frequency, $t_{k_d}^+$ is the second threshold value passage time, $t_{k_d}^-$ is the first threshold value passage time, j is the imaginary unit, and $\rho(t_k^+ - [k_d - 1]T_s)$ is the autocorrelation of the pulse response of the receive filter as a function of $t_k^+ - [k_d - 1]T_s$.

9. Apparatus as claimed in any of claims 1 to 8, comprising a threshold value determiner (320) configured to determine the first threshold value and the second threshold value, the first and second threshold values being based on a performance parameter and a scaling parameter.

10. Apparatus as claimed in claim 9, wherein the threshold value determiner (320) is configured to determine the scaling factor in dependence of a modulation type of the amplitude-modulated receive signal (102) and in dependence of a pulse response of a filter.

11. Apparatus as claimed in claim 10, comprising a receive filter (310), the amplitude-modulated receive signal (102) being transmitted by a transmitter, said transmitter having a transmit filter, the scaling factor depending on a pulse response of the receive filter (310) or on pulse response parameters of the transmit filter, the pulse response parameters of the transmit filter being contained within the amplitude-modulated receive signal 102.

12. Apparatus as claimed in claim 11, wherein the threshold value determiner is configured the scaling factor on the basis of the inequality

$$\zeta_{f_{IF}} < \rho_{\min}(M)\left(1 - \frac{1}{\gamma_{RRC}(\alpha)}\right)$$

with

$$\gamma_{RRC}(\alpha) = \frac{4\alpha + \pi(1-\alpha)}{\pi \sum_{k=-\infty}^{\infty} (-1)^k h_{RRC}(k \cdot T_{symbol}) - 4\alpha - \pi(1-\alpha)}.$$

wherein $\xi_{fIF}$ is the scaling factor, $\rho_{\min}(M)$ is a minimum norm, M is a number of steps of a modulation type used, $\gamma_{RRC}(\alpha)$ is the ratio of the useful component and the sum of the disturbance components, $\alpha$ is the roll-off factor, $h_{RRC}(kT_{symbol})$ is the pulse response of the transmit filter or of the receive filter as a function of $kT_{symbol}$.

13. Receiver (1700) comprising:

an apparatus (100) for determining a data symbol (122) in an amplitude-modulated receive signal (102) as claimed in any of claims 1 to 12, wherein the threshold value passage detector (110) is part of an analog/digital receiver module (1710) of the receiver (1700), and wherein the data symbol determiner (120) is part of a digital signal process (1720) of the receiver (1700).

14. Method (1900) for determining a data symbol in an amplitude-modulated receive signal, comprising:

determining (1910) a first threshold value passage time and a second threshold value passage time, the amplitude-modulated receive signal having a first threshold value at the first threshold value passage time, and the amplitude-modulated receive signal having a second threshold value at the second threshold value passage time, the first and second threshold values differing from each other,

both the first threshold value and the second threshold value being achieved at least once within a symbol interval of the data symbol;
determining (1920) both the amplitude and the phase of the receive signal on the basis of the first threshold value passage time and the second threshold value passage time so as to determine of the data symbol; and
providing (1930) the data symbol.

15. Computer program comprising a program code for performing the method as claimed in claim 14, when the computer program runs on a computer or microcrontroller.

**Revendications**

1. Dispositif (100; 300) pour déterminer un symbole de données (122) dans un signal de réception modulé en amplitude (102), aux caractéristiques suivantes:

   un détecteur de passage à la valeur de seuil (110), qui et conçu pour déterminer un premier moment de passage à la valeur de seuil (112) et un deuxième moment de passage à la valeur de seuil (114), le signal de réception modulé en amplitude (102) présentant, au premier moment de passage à la valeur de seuil (112), une première valeur de seuil et le signal de réception modulé en amplitude (102) présentant, au deuxième moment de passage à la valeur de seuil (114), une deuxième valeur de seuil, la première valeur de seuil et la deuxième valeur de seuil étant différentes l'une de l'autre,
   tant la première valeur de seuil que la deuxième valeur de seuil étant atteintes au moins une fois dans un intervalle du symbole de données; et
   un déterminateur de symbole de données (120) qui est conçu pour déterminer, sur base du premier moment de passage à la valeur de seuil (112) et du deuxième moment de passage à la valeur de seuil (114), tant l'amplitude que la phase du signal de réception, pour déterminer et mettre à disposition le symbole de données (122).

2. Dispositif selon la revendication 1, dans lequel le déterminateur de symbole de données (120) est conçu pour déterminer le symbole de données (122) sur base d'une multiplication d'une variable de quantité et d'une variable de phase.

3. Dispositif selon la revendication 2, dans lequel la variable de quantité est fonction d'une différence entre le premier moment de passage à la valeur de seuil (112) et le deuxième moment de passage à la valeur de seuil (114) et la variable de phase est fonction d'une somme du premier moment de passage à la valeur de seuil (112) et du deuxième moment de passage à la valeur de seuil (114).

4. Dispositif selon l'une des revendications 1 à 3, dans lequel la première valeur de seuil correspond à la deuxième valeur de seuil négative.

5. Dispositif selon la revendication 2 ou 3, dans lequel la première valeur de seuil correspond à la deuxième valeur de seuil négative, et dans lequel la variable de quantité présente, comme coefficient, la première valeur de seuil ou la deuxième valeur de seuil.

6. Dispositif selon l'une des revendications 1 à 5, qui présente un filtre de réception (310), dans lequel le déterminateur de symbole de données (120) est conçu pour déterminer le symbole de données (122) sur base d'une autocorrélation d'une réponse impulsionnelle du filtre de réception (310).

7. Dispositif selon la revendication 2, 3 ou 5, qui présente un filtre de réception (310), dans lequel le déterminateur de symbole de données (120) est conçu pour déterminer le symbole de données (122) sur base d'une autocorrélation d'une réponse impulsionnelle du filtre de réception (310), dans lequel la variable de phase se base sur l'autocorrélation.

8. Dispositif selon la revendication 7, dans lequel le déterminateur de symbole de données (120) est conçu pour déterminer le symbole de données sur base de

$$\underline{\hat{d}}_{k_d} \approx \sqrt{\frac{T_s}{2\varepsilon_d} \frac{a_0}{2\pi f_{IF} \Delta t_{k_d}}} \cdot exp\left\{-j\frac{2\pi f_{IF}\bar{t}_{k_d}}{p(t_k^+ - [k_s - 1]T_s)}\right\}, k_d = 1, \dots, N_d.$$

avec

$$\Delta t_{k_d} = \frac{t_{k_d}^+ - t_{k_d}^-}{2},$$

et avec

$$\bar{t}_{k_d} = \frac{t_{k_d}^+ + t_{k_d}^-}{2}$$

où $\hat{d}_{k2}$ est le symbole de données (122) à déterminer, $k_d$ est un numéro de symbole de données, $T_s$ est une durée de symbole, $\varepsilon_d$ est une énergie de symbole de données moyenne, $a_0$ est la première valeur de seuil ou la deuxième valeur de seuil, $f_{IF}$ est une fréquence intermédiaire, $t_{k_d}^+$ est le deuxième moment de passage à la valeur de seuil, $t_{k_d}^-$ est le premier moment de passage à la valeur de seuil, j est l'unité imaginaire et $\rho(t_k^+ - [k_d - 1]T_s)$ est l'autocorrélation de la réponse impulsionnelle du filtre de réception en fonction de $t_k^+ - [k_d - 1]T_s$.

9. Dispositif selon l'une des revendications 1 à 8, qui présente un déterminateur de valeur de seuil (320) qui est conçu pour déterminer la première valeur de seuil et la deuxième valeur de seuil, la première valeur de seuil et la deuxième valeur de seuil étant basées sur un paramètre de puissance et un facteur d'échelonnement.

10. Dispositif selon la revendication 9, dans lequel le déterminateur de valeur de seuil (320) est conçu pour déterminer le facteur d'échelonnement en fonction d'un type de modulation du signal de réception modulé en amplitude (102) et en fonction d'une réponse impulsionnelle d'un filtre.

11. Dispositif selon la revendication 10, qui présente un filtre de réception (310), dans lequel le signal de réception modulé en amplitude (102) est émis par un émetteur, l'émetteur présentant un filtre d'émission, dans lequel le facteur d'échelonnement est fonction d'une réponse impulsionnelle du filtre de réception (310) ou de paramètres de réponse impulsionnelle du filtre d'émission, les paramètres de réponse impulsionnelle du filtre d'émission étant contenus dans le signal de réception modulé en amplitude (102).

12. Dispositif selon la revendication 11, dans lequel le déterminateur de valeur de seuil est conçu pour déterminer le facteur d'échelonnement sur base de l'inéquation

$$\zeta_{f_{IF}} < \rho_{min}(M)\left(1 - \frac{1}{\gamma_{RRC}(\alpha)}\right)$$

avec

$$\gamma_{RRC}(\alpha) = \frac{4\alpha + \pi(1-\alpha)}{\pi \sum_{k=-\infty}^{\infty} (-1)^k h_{RRC}(k \cdot T_{symbol}) - 4\alpha - \pi(1-\alpha)},$$

où $\xi_{flF}$ est le facteur d'échelonnement, $\rho_{min}$ (M) est une norme minimale, M est un nombre d'étapes d'un type de modulation utilisé, $\gamma_{RRC}$ ($\alpha$) est le rapport entre la part utile et la somme de la part perturbante, $\alpha$ est le facteur de roll-off, $h_{RRC}$ ($kT_{symbol}$) est la réponse impulsionnelle du filtre d'émission ou du filtre de réception en fonction de $kT_{symbol}$.

**13.** Récepteur (1700), à la caractéristique suivante:

un dispositif (100) pour déterminer un symbole de données (122) dans un signal de réception modulé en amplitude (102) selon l'une des revendications 1 à 12, où le détecteur de passage à la valeur de seuil (110) fait partie d'un module récepteur analogique-numérique (1710) du récepteur (1700), et où le déterminateur de symbole de données (120) fait partie d'un processus de signal numérique (1720) du récepteur (1700).

**14.** Procédé (1900) pour déterminer un symbole de données dans un signal de réception modulé en amplitude, aux étapes suivantes consistant à:

déterminer (1910) un premier moment de passage à la valeur de seuil et un deuxième moment de passage à la valeur de seuil, le signal de réception modulé en amplitude présentant, au premier moment de passage à la valeur de seuil, une première valeur de seuil et le signal de réception modulé en amplitude présentant, au deuxième moment de passage à la valeur de seuil, une deuxième valeur de seuil, la première valeur de seuil et la deuxième valeur de seuil étant différentes l'une de l'autre,
dans lequel tant la première valeur de seuil que la deuxième valeur de seuil sont atteintes au moins une fois dans un intervalle du symbole de données;
déterminer (1920) tant l'amplitude que la phase du signal de réception sur base du premier moment de passage à la valeur de seuil et du deuxième moment de passage à la valeur de seuil, pour déterminer le symbole de données; et
mettre à disposition (1930) le symbole de données.

**15.** Programme d'ordinateur avec un code de programme pour réaliser le procédé selon la revendication 14 lorsque le programme d'ordinateur est exécuté sur un ordinateur ou un microcontrôleur.

100

102

Schwellwertdurchgangsdetektor

110

112/114

Datensymbolbestimmer

120

122

FIG 1

FIG 2

-300

Empfangsfilter —310

102

322/324

320

Schwellwertdurchgangsdetektor
110

Schwellwertbestimmer

302

304

112/
114

Datensymbolbestimmer
120

122

FIG 3

FIG 4

FIG 5

—600

| Modulationsart | M | P(M) | $\rho_{min}(M)$ |
|---|---|---|---|
| BPSK | 2 | 1 | 1 |
| QPSK (4-QAM) | 4 | 2 | 1 |
| 16-QAM | 16 | 10 | $\sqrt{1/5}$ |
| 32-Kreuz-QAM | 32 | 20 | $\sqrt{1/10}$ |
| 64-QAM | 64 | 42 | $\sqrt{1/21}$ |
| 256-QAM | 256 | 170 | $\sqrt{1/85}$ |
| 1024-QAM | 1024 | 682 | $\sqrt{1/341}$ |

# FIG 6

FIG 7

EP 2 273 744 B1

FIG 8

FIG 9

FIG 10

FIG 11

EP 2 273 744 B1

FIG 12

FIG 13

FIG 14

1500

FIG 15

FIG 16

1700

analog-digital
Empfängermodul

~102

Schwellwertdurchgangsdetektor

~1710

110

~100

112/
114

120

Datensymbolbestimmer

~1720

~122

digitaler
Signalprozessor

FIG 17

**FIG 18**

TMS320C6416 DSK

1842 — 1844

irregular, digital, diskret

Schwellwertdurch-gangsdemodulator ← Synchro-nisation ← RX-FIFO ← Zähler ← Schwellwertdurch-gangsdetektor

digitales Schnittstellen-modul

Taktgeber — 1832

1800

1830

1710 Analog/Digital-Empfängermodul

Zwischenfrequenz, analog

110

1720

regulär, digital, diskret

1848 Master-Controller

1846 — Datennach-verarbeitung

EDMA

1836 1839

USB-Controller

1838

1834 Controller

1820 Bandpass-filter

Atmel-EVM

HF 1810 analog

Zwischenfrequenz analog

1860 Personal-computer — 1854

1862 — Chat

1864 — Video-stream

1866 — WWW

1868 — Live-video

Bildschirm

Numerische Tastatur — 1852

Berührungs-empfindlicher Bildschirm — 1856

Mensch-Maschine-Schnittstellen — 1850

EP 2 273 744 B1

1900

Bestimmen eines ersten Schwellwertdurchgangszeitpunkts und eines zweiten Schwellwertdurchgangszeitpunkts, wobei das amplitudenmodulierte Empfangssignal zu dem ersten Schwellwertdurchgangszeitpunkt einen ersten Schwellwert aufweist, und wobei das amplitudenmodulierte Empfangssignal zu dem zweiten Schwellwertdurchgangszeitpunkt einen zweiten Schwellwert aufweist, wobei sich der erste Schwellwert und der zweite Schwellwert unterscheiden.

1910

Bestimmen des Datensymbols basierend auf dem ersten Schwellwertdurchgangszeitpunkt und dem zweiten Schwellwertdurchgangszeitpunkt.

1920

Bereitstellen des Datensymbols.

1930

FIG 19

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Nicht-Patentliteratur

- Neubauer, A.: Irreguläre Abtastung. Springer, 2003
- Entwurf und Realisierung von multistandardfähigen Nulldurchgangsempfängerstrukturen für die drahtlose Kommunikationstechnik, Fachgebiet Kommunikationstechnik, Fakultät Ingenieurwissenschaften der Universität Duisburg-Essen. **Scholand, T.** Dissertation. Shaker Verlag, 2007
- **Neubauer, A.** Irreguläre Abtastung. Springer, 2003
- **Duisburg-Essen.** Dissertation. Shaker Verlag
- Entwurf und Realisierung von multistandardfähigen Nulldurchgangsempfängerstrukturen für die drahtlose Kommunikationstechnik, Fachgebiet Kommunikationstechnik, Fakultät Ingenieurwissenschaften der Universität Duisburg-Essen. **Scholand, T.** Dissertation. Aachen. Shaker Verlag, 2007
- *3GPP TS 45.001,* 2008
- **Duisburg-Essen.** Dissertation. Shaker Verlag, 2007
- **Sklar, B.** Digital communications, fundamentals and applications. Prenticel-Hall, 1988
- Digital communications, fundamentals and applications. **Sklar, B.** Englewood Cliffs. Prenticel-Hall, 1988
- Entwurf und Realisierung von multistandardfähigen Nulldurchgangsempfängerstrukturen für die drahtlose Kommunikationstechnik, Fachgebiet Kommunikationstechnik, Fakultät Ingenieurwissenschaften der Universität Duisburg-Essen. **Scholand, T.** Dissertation. 2007
- **Sklar, B .** Digital communications, fundamentals and applications. Prenticel-Hall, 1988
- **Bedrosian, E ; Rice, S.O.** Distortion and crosstalk of linearly filtered, angle-modulated signals. *Proceedings of the IEEE,* 1968, vol. 56, 2-13
- Digital Communications. **Proakis, J, G.** Zweite Auflage. McGraw-Hill, 1989
- **Molisch, A.** Wireless Communications. Chichester. IEEE Press - Sohn Wiley & Sons, November 2005
- Wireless Communications. **Molisch, A.** Chichester. IEEE Press - Sohn Wiley & Sons, November 2005
- **Proakis, J, G.** Digital Communications. McGraw-Hill, 1989
- **Beaulieu, N. C. ; Chen, Y.** Closed-Form Expressions for the Exact Symbol Error Probability of 32-Cross-QAM in AWGN and in Slow Nakagami Fading. *IEEE Communications Letters,* 2007, vol. 11, 310-312
- **Vitthaiadevuni, P, K ; Alouini, M. S. ; Kieffer, J. C.** Exact BER Computation for Cross QAM Constellations. *IEEE Transactions on Wireless Communications,* 2005, vol. 4, 3039-3050
- Analog Devices: Ultrafast, 4 ns Single-Supply Comparators AD8611/AD8612. *Datenblatt,* August 2006
- Infineon Technologies AG: Halbleiter: technische Erläuterungen, Technologien und Kenndaten. Publicis Corporate Publishing, 2004
- Lattice Semiconductor Corporation: ispMACH 4000 V/B/C/Z Family 3.3V/2.5V/1.8V In-System Programmahle Super FAST High Density PLDs. Datenblatt. Februar 2006
- **Burnic, A. ; Faber, T. ; Scholand, T. ; Jung, P.** On irnplementation aspects of fast iterative tap amplitude and delay estimation for UMTSIWCDMA. *IET Communications,* April 2007, vol. 1